# EUROPEAN PATENT APPLICATION

(11) **EP 1 100 032 A2**
(43) Date of publication of application: **16.05.2001**
(21) Application number: 00309428.1
(22) Date of filing: 26.10.2000
(51) Int. Cl.: G06F 17/60

(54) **Method implemented on a wireless pre-paid platform of business-to-business transaction processing and billing.**

(30) Priority: 12.11.1999 US 439056; 12.11.1999 US 439110
(71) Applicant: Nortel Networks Limited, Montreal, Quebec H2Y 3Y4 (CA)
(72) Inventor: Prem, Obhan, Texas 75023 (US)
(74) Representative: Mackenzie, Andrew Bryan

(57) **Abstract**

A maintenance and permissioning system which interfaces with both a vendor's legacy system and a wireless provider's pre-paid platform is provided. Messages are sent to wireless provider **851** by some transfer medium **812**. On the wireless service provider side of the transaction, the system includes a padded cell for processing transactions from the vendor **854**. This cell includes pre-paid platform transaction extraction **858** for extracting only those parts of the messages compliant with the pre-paid platform. Transfer protocol APIs **860** are also included for converting messages to a protocol agreed upon by both the vendor and the wireless service provider. Once in place, the business-to-business enterprise provides a means for establishing heretofore unknown business models in which to implement new business methods. In one such model, reseller model **2000**, reseller **2006** is provided with a means for marketing the of WSP's products and services to customers **2008** as though reseller **2006** was the originator of the commodity. In accordance with another business model, reward model **2100**, vendor **2106** is enabled with a means for rewarding loyal customers **2108**, thereby enticing new customers and building new customer/vendor relationships through the rewarding of valuable rewards-airtime minutes.

## Description

### 1. Field of the Invention:

The present invention relates to information processing. More particularly, the present invention relates to conducting electronic transactions between businesses. Still more particularly, the present invention relates to a system and method for implementing a platform for adapting and coupling businesses' transaction processing and billing systems, which also provides secure communication between business partners.

### 2. Background of the Invention:

In the wireless service business model, wireless service providers (WSPs) operate and usually own a wireless network for servicing clients' wireless communications needs. The WSP is an expert at running, maintaining and upgrading the wireless communications network. By merely making available efficient, high speed wireless communications options, the WSP attracts a core group of clients. This group of clients, while discriminating, is generally loyal to the WSP without the service provider expending much in the way of resources to maintain that loyalty. This core group of clients, for the most part, remains loyal to the WSP in appreciation for the service providers' attention to the core job of maintaining an efficient, high speed wireless network and for bringing new services and products to the client.

Generally, service providers bill their clients for wireless products and services using post-paid and pre-paid billing models. In the post-paid model, the client incurs wireless charges and fees over a billing period and receives a bill for services due at the end of that period. In the pre-paid model the client pre-pays for wireless services, and as the services are used, the WSP debits the amount of the service from the client's account. Periodically, the client recharges the pre-paid account for additional services to be used in the future.

In both the pre-paid and post-paid models, WSPs incur a substantial cost in signing up new customers. The cost of acquiring customers is one of the most important financial yardsticks in the communications business, which is why it is often a closely guarded secret. However, the cost of sales and marketing to potential clients is necessary for expanding the client base and enabling the WSP to offset the cost of new and innovated services due to the scale of the client base.

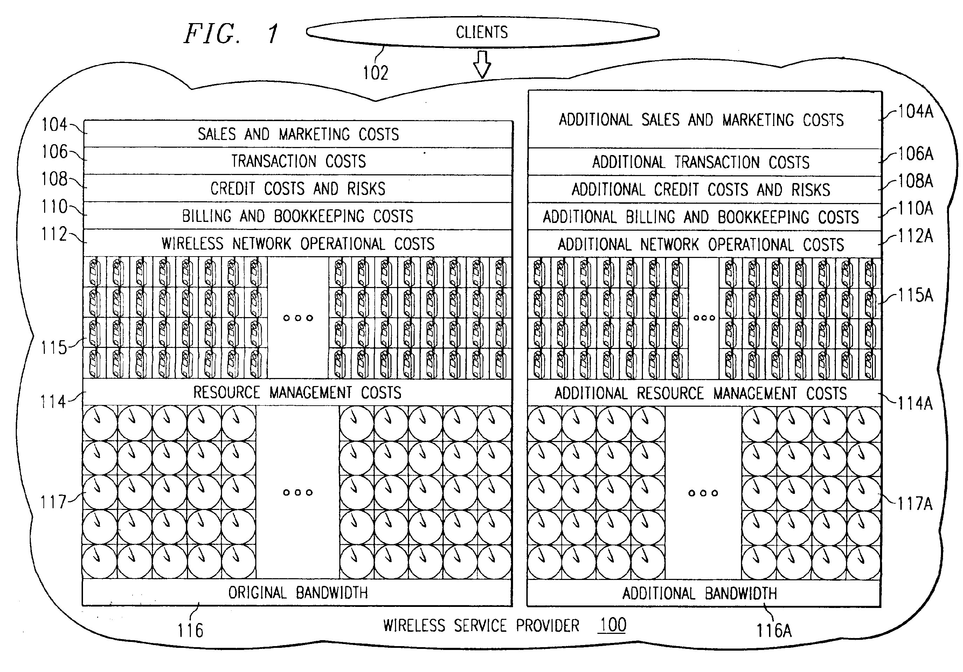

Consider **Figure 1**, which depicts the costs associated with expanding the pre-paid side of a wireless network, outside of the core group of clients defined above. The core business of WSP **100** is providing clients **102** with wireless communication products and services. WSP **100** incurs significant sales and marketing costs **104** to maintain existing clients, although as will be shown below, the cost of attracting new clients to the provider's services is disproportionately higher. Additionally, each transaction between WSP **100** and client **102** results in additional expense to the WSP due to transaction costs **106**. As in any business, WSP **100** incurs normal credit costs and risks **108** and billing and bookkeeping costs **110** associated with maintaining its client base. Finally, operational costs **112** of the wireless network itself constitute a major expense to WSP **100**. However, because operating the wireless network is the core area of expertise of WSP **100**, it might be that the most effective resource expenditure to the WSP is the wireless network operational costs **112**.

An important aspect of administration of the pre-paid system is leveraging bandwidth costs to the size of the bandwidth. WSP **100** initially provides an original bandwidth **116** over which it operates the wireless network. Associated with bandwidth **116** is a set number of wireless telephone numbers also increases or decreases. However, the number of telephone numbers available to clients **102** from WSP **100** is not completely proportional to bandwidth **116**. Another factor considered by the operators of WSP **100** is client usage of each of the phone numbers in bandwidth **102**.

As an example, a clientele of prolific users tends to reduce the amount of available telephone numbers because the wireless service operator calculates bandwidth on a time usage assumption. The quantity of wireless phone numbers **115** that is available on a given bandwidth **116** is inversely proportional to usage or airtime **117** that each wireless number is active. As a result, WSP **100** incurs certain resource management costs **114** because of under-utilization of bandwidth due to under-allocation of telephone numbers, as well as client dissatisfaction over limited access to the network due to over-allocation of telephone numbers. One caveat, although a present measure of network usage is the combination of allocated numbers and air-time associated with each allocated number, such a formula presupposes a predetermined data transfer rate. Network usage might, instead, be measured by the total amount of data transferred, the transfer rate, or some combination of the above mentioned criteria.

In order to attract new clients or alleviate overcrowding of the wireless network, WSPs, from time to time, increase the bandwidths of their wireless networks. The additional bandwidth results in additional network operating costs **112A** to WSP **100**. However, as was discussed above, WSP **100** is in the business of operating a wireless network so in many cases, the added operational expenses **112A** incurred from expanding the original bandwidth are disproportionately lower than original network operating costs **112**. Therefore, from a strictly operational standpoint, network expansion is a good thing because the additional costs are lower, and new service and products may be offered to the WSP's clients due to the scale of the network expansion.

Any additional bandwidth **116A** requires additional marketing and sales to attract new clients **102** and/or to sell new services to existing clients. With each incremental bandwidth expansion, WSP **100** can expect disproportionately higher and higher additional sales and marketing costs **104A**. Generally, it is expected that less sales and marketing expenses are incurred for maintaining a core group of clients and a core group of services. The additional bandwidth is likely to be directed at clients and services outside the core group and, therefore, require more expense to bring the bandwidth up to a utilization level comparable to that of original bandwidth **116**.

The potential new group of clients necessary for a successful network and business expansion is not likely to be as easily attracted to the wireless system, nor as easily maintained by the wireless provider, as compared to the already existing base of loyal clients. This might be due to a number of factors, such as, for example, difficulties in marketing wireless services directly to customers, existence of customers from all income groups, and current reliance of WSPs on prominently located resellers (e.g., in malls, train stations, etc.). Wireless communication may not be as much in need of efficient, high speed wireless communications. Additionally, they might not be in the financial position to take advantage of wireless communications, even if they do perceive a benefit of wireless communications in their lives. Finally, the prospective clients may simply not be as mobile as the WSP's existing client base. That is to say, potential new clients may not have the means nor the time to spend in finding and traveling to the WSP's designated sign-up location. Therefore, additional resources must be devoted by WSP **100** to lure potential new clients to its designated sign up location.

For all the new clients and services, WSP **100** incurs additional transaction costs **106A**, and additional credit costs and risks **108A**. The credit costs and risks associated with additional bandwidth also increase substantially when compared to the original bandwidth associated with the initial core group of clients. The reason for this substantial increase is due to the credit-challenged posture likely to be typical of many of the newer clients, as opposed to the core clients. As would be expected, billing and bookkeeping costs **110A** increase proportionally to the increased credit costs and risks. Therefore, it is not advantageous for WSP **100** to increase wireless network bandwidth beyond the point where additional sales, marketing, billing, bookkeeping, and credit costs become disproportionately burdensome in terms of network operational expenses compared to increased income. That is, unless the WSP is increasing fees for the services provided to the new clients in order to offset the disproportionately high costs associated with the expansion.

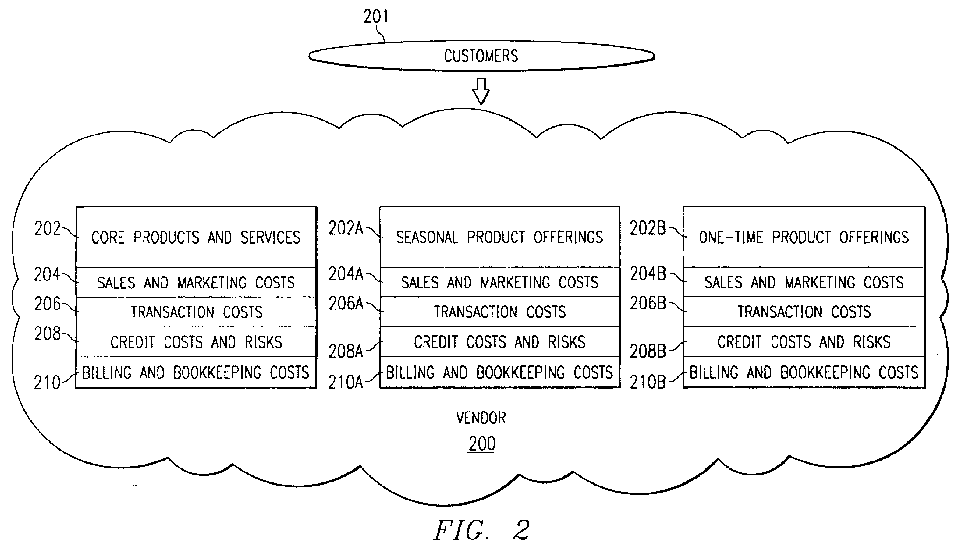

**Figure 2** is a block diagram illustrating the costs incurred by a vendor of goods and services in day-to-day sales. Vendor **200** offers a variety of products and services to customers **201.** In this example, product and service offerings to customers **201** by vendor **200** can be divided into vendor's core products and services **202**, vendor's seasonal product offerings **202A**, and one-time product offerings **202B.** As can be seen by the diagram, core products and services **202** are proportionately less expensive to sell than either seasonal product offerings **202A** or one-time product offerings **202B**. That is not to say that each product offering is not profitable to vendor **200**. However, vendor **200** is much more familiar with its core products and the customer's response to them, as well as the transaction procedures required for selling the core products.

A similar situation occurs between vendor **200** and customers **201**, as was shown between WSP **100** and clients **102**, in that less expense is incurred for maintaining a core product and/or service line for a core clientele/customer base. In the present example, core products and services **202** require an investment of sales and marketing **204** to attract customers **201**, which results in certain transaction costs **206** and credit costs and risks **208** associated with conducting customer business, as well as regular billing and bookkeeping costs **210** for maintaining the vendor/customer relationships.

In comparison, vendor **200** might provide customers **201** with certain seasonal product offerings **202A**. Seasonal product offerings, while typically offered on an annual or semi-annual basis, still require a larger investment for sales and marketing **204A** than do core products and services. It is expected that any deviation from the vendor's primary business of selling its core product and service line will result in a disproportionate increase in expenses to the vendor. As indicated, transaction costs **206A** and credit costs and risks **208A** will also increase disproportionately to those costs as incurred from sales of the core products and services. Likewise, billing and bookkeeping costs **210A** will also increase disproportionately.

Finally, vendor **200** incurs the highest costs associated with making one-time product or service offers **202B,** as opposed to selling the core products and services. Since the work force of vendor **200** is less familiar with one-time product offerings, it is expected that sales and marketing costs **204B** will be substantially greater than those associated with core products and services. Transaction costs **206B** associated with an unfamiliar product are also exceptionally high in comparison to core products and services. It is further expected that credit costs and risks **208B** will be higher than those associated with the core products and services, as will be billing and bookkeeping costs **210B.**

Therefore, it is advantageous for a retailer to leverage its customer base by expanding its core product and service line, which it can then market to its core customer base, thereby reducing the additional costs for sales and marketing, transactions, credit and risks, and billing and bookkeeping.

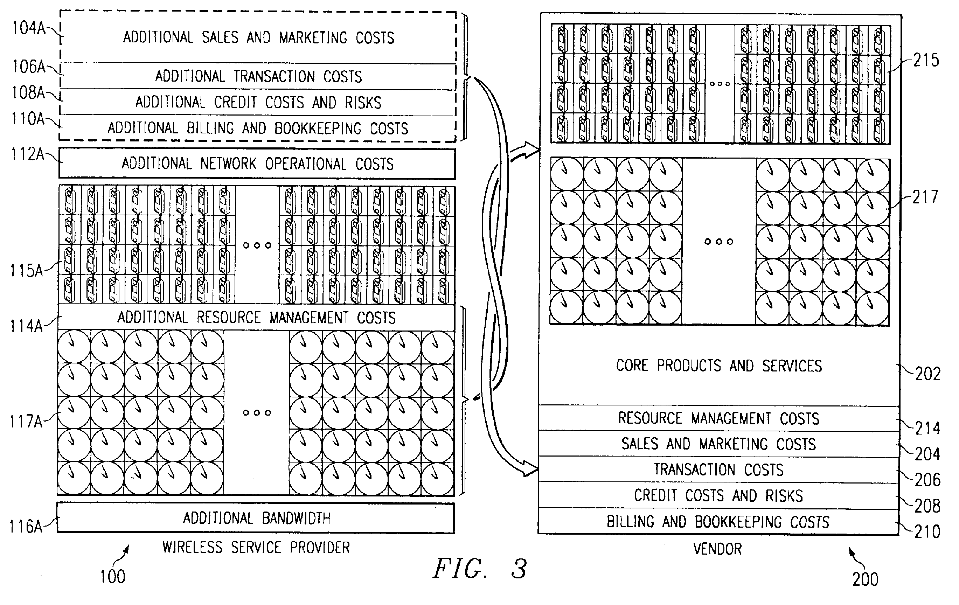

**Figure 3** is a block diagram depicting an ideal business-to-business relationship between a WSP and a vendor, in which both the WSP and the vendor concentrate on their particular core businesses. It is supposed that vendor **200** is constantly on the lookout for new goods and services to add to its repertoire of core business, thereby expanding its offerings to its core customer base and/or increasing its core customer base. One pre-condition, however, is that vendor **200** requires a certain amount of control over any new goods and services offered. Vendor **200** can thus accurately gauge the cost associated with the product, streamline the transaction process, and reduce risks and other costs as much as possible.

Likewise, WSP **100** is most efficient when concentrating on the core business of operating its wireless network. Similar to vendor **200**, WSP**100** is always on the lookout for opportunities to contract large blocks of bandwidth to creditworthy clients, thereby eliminating the majority of costs other than the actual operation of the wireless network.

In **Figure 3**, WSP **100** allocates a certain bandwidth associated'with a set number of phone numbers and/or airtime to vendor **200**. As a result, vendor **200** controls that amount of bandwidth and, in turn, is responsible for sales and marketing costs **204**, transaction costs **206**, and the costs related to maintaining its customers, including the usual credit costs and risks **208** and billing and bookkeeping costs **210**.

WSPs that currently engage in business-to-business associations with vendors face several roadblocks in establishing these marketing alliances. Both businesses operate proprietary computer systems that manage customer billing. For effective administration of customer accounts, billings, etc., both businesses rely on massive amounts of data entry, in addition to paper-based systems. Even if electronic communication exists between the disparate transaction, processing and billing systems, they tend to be awkward. Another problem with prior art technologies is that the establishment of business-to-business relationships takes months/years. Introduction of a new marketing programs by a vendor takes excessive coordination with the service provider and, when attention is not focused on details, customer dissatisfaction can result.

Additionally, other problems exist with prior art technologies which, heretofore, were thought to be unrelated. For example, existing methods of recharging or topping-up a pre-paid wireless account are either operator-assisted or voucher-based. Operator-based systems require the WSP to establish toll-free call centers with telephone operators who take credit card/bank account information over the phone, etc. The problem here is twofold: one, the cost of staffing a call center; and, two, credit-challenged pre-paid users usually have difficulty paying by credit card and/or check.

Currently, voucher-based recharging systems are very popular. A subscriber purchases a $10/$20/$50, etc. denominated voucher at any store that sells communications products. The subscriber dials into a self-service IVR system, enters the unique voucher number and applies it to the pre-paid account. Almost any store can sell these vouchers. Therefore, from an availability standpoint, this solution is quite desirable. The WSP, however, is saddled with generating unique numbers, entering them into the pre-paid platform database, providing these numbers to a voucher printer, and ensuring that there are enough numbers for distributors/retailers all over the state/nation.

Also void from the prior art are business relationships which rely on either or both business partners giving partial control to another business partner. Previously, the security constraints needed for assuring the integrity for one business entity, were inflexible and unduly burdensome to its partner. On the other hand, by relinquishing a portion of a corporation's innate control and thereby increasing flexibility toward its business partners, a corporation's core business endeavors could be compromised. In addition to the control and security concerns, prior art business enterprises required an inordinate investment of startup time and capital in order to ensure economic viability of the partners.

Heretofore, no prior art system has been found which allow businesses to form partnerships which would allow one partner to relinquish control of core services to another partner, while adequately ensuring its security. Additionally, no prior art system has been devised which would allow a WSP to allocate such control to other businesses and still maintain the integrity of its internal administration infrastructure. Clearly, an efficient means of applying recharge transactions taking place at a vendor's location to a WSP's transaction processing systems in real time, is not available today.

### SUMMARY OF THE INVENTION

The present invention is disclosed in response to the above mentioned shortcomings. The present invention relates a business method that employs a business-to-business enterprise between the business partners. One such enterprise is the open vendor account administration, maintenance and permissioning system (OVAAM&P), disclosed within, which provides a platform for conducting secure transactions relating to the sale of wireless minutes over the Internet. The OVAAM&P is a business-to-business e-commerce solution providing a message-based interface for management of a pre-paid wireless service. Based on open and secure IP technology, OVAAM&P allows wireless service providers to electronically couple their pre-paid systems with the legacy transaction processing and billing systems of business partners. This electronic coupling allows retail/wholesale monetary transactions executed at a vendor's point of sale (POS) to be automatically propagated to respective subscriber accounts on a pre-paid system operated by a wireless service provider.

The system also allows propagation of non-monetary transactions relating to the maintenance of one or more subscriber accounts between the vendor systems and the wireless service provider's pre-paid platform. OVAAM&P allows wireless service providers to enter into innovative marketing alliances with their business partners and quickly set up cost effective retail/wholesale/reseller distribution channels based on the pre-paid service model. Furthermore, OVAAM&P allows wireless service providers to proliferate marketing/distribution channels, shift the cost of service/handset subsidization to partners, and reduce marketing and retailing costs.

The present invention includes a platform allowing the transactions initiated with a vendor's legacy transaction processing and billing system to be processed on the wireless service provider's pre-paid platform. The vendor legacy system is provided with application program interfaces (APIs) for converting the vendor's legacy transactions to transactions compatible with the wireless provider's pre-paid platform. These interfaces include transfer protocol APIs for converting messages to a protocol agreed upon by both the vendor and the wireless service provider.

Other components include vendor legacy system-to-pre-paid platform APIs for converting transactions initiated on the vendor's legacy system to transactions conforming to the pre-paid platform of the wireless service provider. Finally, encryption and decryption capabilities are provided for securing the transmission of data between vendor and provider.

Messages are then sent to the wireless provider by some transfer medium. On the wireless service provider side of the transaction, the OVAAM&P includes a padded cell for processing transactions from the vendor. This cell consists of encryption and decryption APIs for decoding messages from the vendor and for encoding transaction responses to be transferred to the vendor. Also provided are pre-paid platform transaction extraction capabilities for extracting only those parts of the messages compliant with the pre-paid platform. Transfer protocol APIs are also included for converting messages to a protocol agreed upon by both the vendor and the wireless service provider. Finally, the padded cell may include a pre-paid platform security layer for maintaining the integrity of the wireless provider's pre-paid platform.

Once in place, the business-to-business enterprise provides a means for establishing heretofore unknown business models in which to implement new business methods. In one such model, a reseller model, a reseller is provided with a means for marketing the of wireless service provider's products and services to its customers as though the reseller were the originator of the wireless services. In accordance with the reward business model, a vendor is enabled with a means for rewarding loyal customers through the issuance of airtime rewards, thereby enticing new customers and building new customer/vendor relationships. In the co-branding business model, two or more consumer brands are tied together to create products and services that leverage the unique brand appeal of each. Here, the vendor does not intend to portray itself as a wireless service provider, but instead, merely enhances some aspect vendor's own product line with wireless services. Finally, a special case co-branding model includes a wireless service provider and a telecommunications service provider that does not have wireless service in its telecom bundle. In the special case co-branding model the telcom business partner can bundle wireless service from the wireless service provider partner, thereby giving the telecom partner's customer a more complete bundle of telecom services to offer its customers.

Other aspects and features of the present invention will become apparent to those ordinarily skilled in the art upon review of the following descriptions of specific embodiments of the invention in conjunction with the accompanying figures.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** is a block diagram illustrating the costs incurred by a wireless service provider in the administration of a pre-paid system;
**Figure 2** is a block diagram illustrating the costs incurred by a vendor in day-to-day sales;
**Figure 3** is a block diagram depicting an ideal relationship between a wireless service provider and a vendor, in which both the wireless service provider and the vendor concentrate on their core business;
**Figure 4** is a pictorial representation of a distributed data processing system in which the present invention may be implemented;
**Figure 5** is a block diagram of a data processing system that may be implemented as a server in accordance with the present invention;
**Figure 6** is a block diagram of a data processing system in which the present invention may be implemented;
**Figure 7** illustrates a business-to-business transaction processing and billing system between a wireless service provider and a vendor using the Internet as a transmission medium;
**Figure 8** is a block diagram depicting the components of an open vendor account administration, maintenance, and permissioning (OVAAM&P) system in accordance with a preferred embodiment of the present invention;
**Figure 9** is a block diagram depicting a relationship between a vendor and a wireless service provider utilizing an OVAAM&P system in accordance with a preferred embodiment of the present invention;
**Figure 10**, is a block diagram depicting a business-to-business transaction for wireless services in accordance with a preferred embodiment of the present invention;
**Figure 11** is a block diagram illustrating the transfer of funds in accordance with a preferred embodiment of the present invention;
**Figure 12** is a flowchart depicting the process by which a wireless service provider establishes a business association with a vendor;
**Figure 13** is a flowchart depicting the process by which the service provider processes a transaction for setting up a new subscriber account from the vendor;
**Figure 14** is a flowchart depicting a process for recharging an existing subscriber account in accordance with a preferred embodiment of the present invention;
**Figure 15** is a flowchart depicting a vendor processing a vendor transaction using the OVAAM&P system in accordance with a preferred embodiment of the present invention;
**Figure 16** is a flowchart illustrating the process by which a transaction is processed by the vendor using the OVAAM&P system in accordance with a preferred embodiment of the present invention;
**Figure 17** is a flowchart depicting asynchronous processing of requests from subscribers/clients to recharge their accounts with their wireless service providers at a vendor location using the OVAAM&P system in accordance with a preferred embodiment of the present invention;
**Figure 18** is a flowchart depicting the synchronous processing of requests from subscribers/clients to recharge their accounts with their wireless service providers at a vendor location using the OVAAM&P system in accordance with a preferred embodiment of the present invention;
**Figure 19** is a flowchart depicting a vendor-customer transaction including the issuance of airtime rewards in accordance with a preferred embodiment of the present invention;
**Figure 20** is a block diagram depicting an innovative business model utilizing an ingenious business-to-business enterprise in accordance with a preferred embodiment of the present invention;
**Figure 21** is a block diagram depicting an innovative business model utilizing an ingenious business-to-business enterprise, wherein a customer earns rewards simply for conducting business with a vendor in accordance with a preferred embodiment of the present invention;
**Figure 22** is a block diagram depicting an innovative co-branding business model utilizing an ingenious business-to-business enterprise in accordance with a preferred embodiment of the present invention, wherein two businesses band together in order to offer supplemental products to the customer, which increase the appeal of core product lines; and
**Figure 23** is a block diagram depicting an innovative co-branding business model utilizing an ingenious business-to-business enterprise in accordance with a preferred embodiment of the present invention, wherein two telecom businesses band together in order to offer supplemental products to the customer, which increase the appeal of core telecom product.

### DETAILED DESCRIPTION OF THE PREFERRED EMBODIMENT

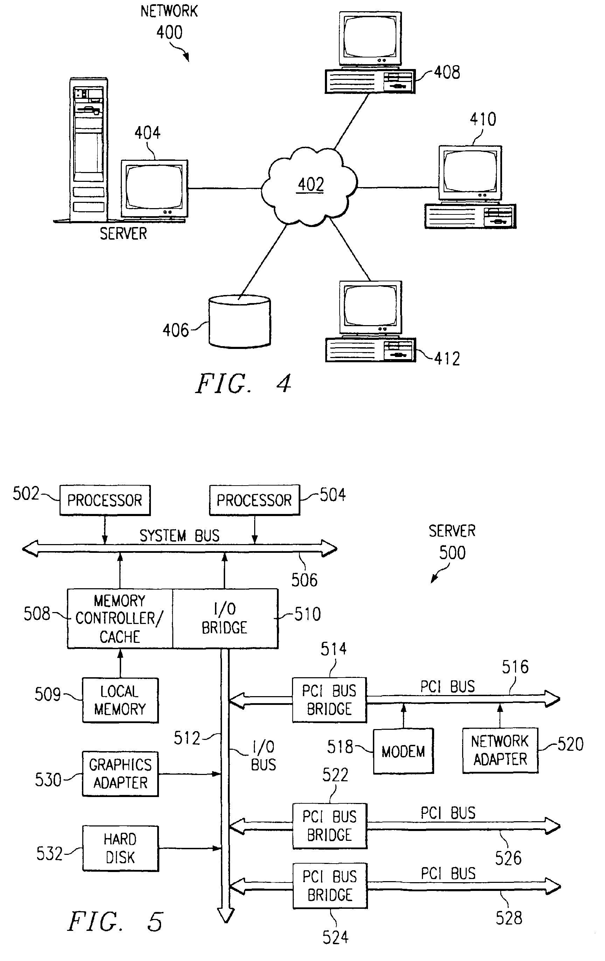

With reference now to the figures, and in particular with reference to **Figure 4,** a pictorial representation of a distributed data processing system in which the present invention may be implemented is depicted.

Distributed data processing system **400** is a network of computers in which the present invention may be implemented. Distributed data processing system **400** contains a network **402**, which is the medium used to provide communications links between various devices and computers connected together within distributed data processing system **400**. Network **402** may include permanent connections, such as wire or fiber optic cables, or temporary connections made through telephone connections.

In the depicted example, server **404** is connected to network **402**, along with storage unit **406**. In addition, clients **408, 410** and **412** also are connected to network **402**. These clients **408, 410** and **412** may be, for example, personal computers or network computers. For purposes of this application, a network computer is any computer coupled to a network, which receives a program or other application from another computer coupled to the network. In the depicted example, server **404** provides data, such as boot files, operating system images, and applications, to clients **408, 410** and **412**. Clients **408, 410** and **412** are clients to server **404**. Distributed data processing system 400 may include additional servers, clients, and other devices not shown.

In the depicted example, distributed data processing system **400** is the Internet, with network **402** representing a worldwide collection of networks and gateways that use the TCP/IP suite of protocols to communicate with one another. At the heart of the Internet is a backbone of high-speed data communication lines between major nodes or host computers consisting of thousands of commercial, government, education, and other computer systems that route data and messages. Of course, distributed data processing system **400** also may be implemented as a number of different types of networks, such as an intranet or a local area network.

In reference to the present invention, clients **408, 410** and **412** may be terminals or check out registers within a vendor's legacy system connected though internal network **402** to server **404** which supports the vendor's legacy transaction processing and billing system. Furthermore, network **400** may typify a configuration necessary for business to business transaction. For instance, connected to a mutually agreed upon network **402**, both vendor clients and servers and wireless service provider's clients and servers may communicate with each other using a predetermined protocol.

**Figure 4** is intended as an example and not as an architectural limitation for the processes of the present invention.

Referring to **Figure 5**, a block diagram of a data processing system which may be implemented as a server, such as server **404** in **Figure 4**, is depicted in accordance with the present invention. Data processing system **500** may be a symmetric multiprocessor (SMP) system including a plurality of processors **502** and **504** connected to system bus **506**. Alternatively, a single processor system may be employed. Also connected to system bus **506** is memory controller/cache **508**, which provides an interface to local memory **509**. I/O bus bridge **510** is connected to system bus **506** and provides an interface to I/O bus **512**. Memory controller/cache **508** and I/O bus bridge **510** may be integrated as depicted.

Peripheral component interconnect (PCI) bus bridge **514** connected to I/O bus **512** provides an interface to PCI local bus **516.** Modem **518** and network adapter **520** may be connected to PCI bus **516**. A network adapter is generally defined as any circuitry that allows devices to communicate with other devices on a particular network such as the Internet, an intranet or other network configuration including local area networks (LAN) and wide area networks (WAN). Typical PCI bus implementations support four PCI expansion slots or add-in connectors. Communications links to network computers **408, 410** and **412** in **Figure 4** may be provided through modem **518** and network adapter **520**, connected to PCI local bus **516** through add-in boards.

Additional PCI bus bridges **522** and **524** provide interfaces for additional PCI buses **526** and **528,** from which additional modems or network adapters may be supported. In this manner, server **500** allows connections to multiple network computers. A memory mapped graphics adapter **530** and hard disk **532** may also be connected to I/O bus **512** as depicted, either directly or indirectly.

Those of ordinary skill in the art will appreciate that the hardware depicted in **Figure 5** may vary. For example, other peripheral devices, such as optical disk drives and the like, also may be used, in addition to or in place of the hardware depicted. The depicted example is not meant to imply architectural limitations with respect to the present invention.

The data processing system depicted in **Figure 5** may be, for example, an IBM RS/6000 system, a product of International Business Machines Corporation in Armonk, New York, running the Advanced Interactive Executive (AIX) operating system.

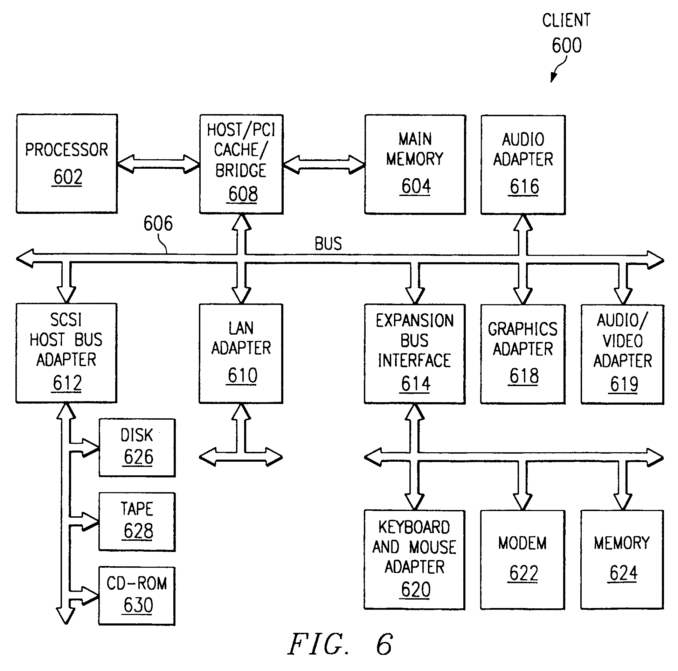

With reference now to **Figure 6**, a block diagram of a data processing system in which the present invention may be implemented is illustrated. Data processing system **600** is an example of a client computer. Data processing system **600** employs a peripheral component interconnect (PCI) local bus architecture. Although the depicted example employs a PCI bus, other bus architectures such as Micro Channel and ISA may be used. Processor **602** and main memory **604** are connected to PCI local bus **606** through PCI bridge **608**. PCI bridge **608** also may include an integrated memory controller and cache memory for processor **602**. Additional connections to PCI local bus **606** may be made through direct component interconnection or through add-in boards. In the depicted example, local area network adapter **610**, SCSI host bus adapter **612**, and expansion bus interface **614** are connected to PCI local bus **606** by direct component connection. In contrast, audio adapter **616**, graphics adapter **618**, and audio/video adapter (A/V) **619** are connected to PCI local bus **606** by add-in boards inserted into expansion slots. Expansion bus interface **614** provides a connection for a keyboard and mouse adapter **620**, modem **622**, and additional memory **624**. SCSI host bus adapter **612** provides a connection for hard disk drive **626**, tape drive **628,** and CD-ROM drive **630** in the depicted example. Typical PCI local bus implementations support three or four PCI expansion slots or add-in connectors.

In the present example, an operating system runs on processor **602** and is used to coordinate and provide control of various components within data processing system **600** in **Figure 6**. The operating system may be a commercially available operating system, such as OS/2, which is available from International Business Machines Corporation ("OS/2" is a trademark of International Business Machines Corporation), or a UNIX based system such as AIX, also available from International Business Machines Corporation. An object oriented programming system such as Java may run in conjunction with the operating system and provides calls to the operating system from Java™ programs or applications executing on data processing system **600**. Java Text Markup Language (JTML) is an HTML-like language that enables users to use Java with the ease of using HTML for creating web pages. JTML is an integrated package of tools for the development of Java applets and user interfaces. It allows almost anyone with a need for online communication to create state-of-the-art applets without understanding Java programming concepts. JTML allows administrators to set up personal user accounts for authorizing users and to set up routines for automatically recording transactions between a JTML server and individual users. Instructions for the operating system, the object-oriented operating system, and applications or programs are located on storage devices, such as hard disk drive **626**, and may be loaded into main memory **604** for execution by processor **602**.

Those of ordinary skill in the art will appreciate that the hardware in **Figure 6** may vary depending on the implementation. For example, other peripheral devices, such as optical disk drives and the like, may be used in addition to or in place of the hardware depicted in **Figure 6**. The depicted example is not meant to imply architectural limitations with respect to the present invention. For example, the processes of the present invention may be applied to multiprocessor data processing systems.

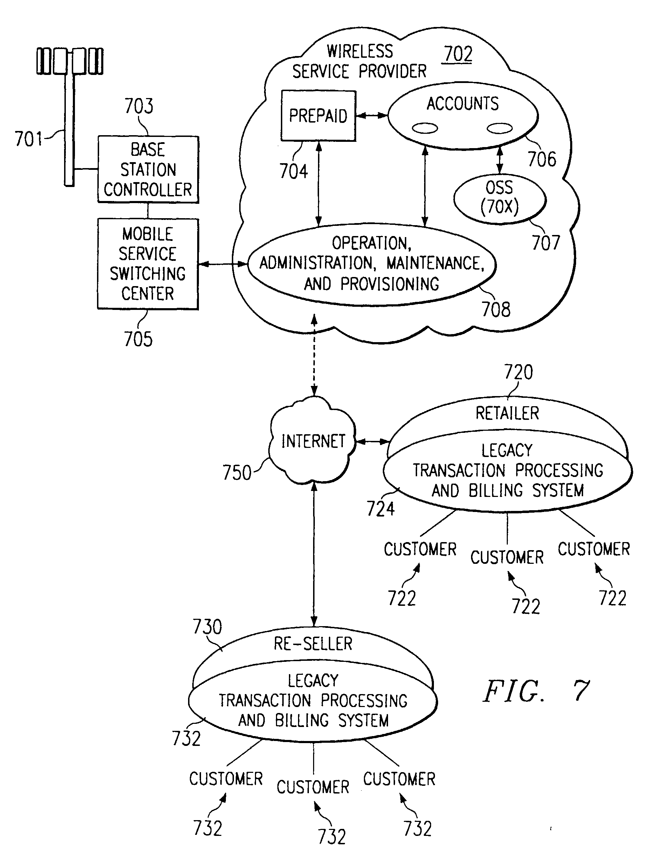

**Figures 4, 5** and **6** illustrate a preferred embodiment of a computer system which may advantageously employ the business-to-business transaction processing system of the present invention. The system of **Figure 4** may be seen to represent clients or servers for businesses depicted in **Figures 7, 9** and **11.**

**Figure 7** illustrates a business-to-business transaction processing and billing system between a wireless service provider (WSP) and a vendor using the Internet as a transmission medium. In the depicted example, WSP **702** operates a series of base transceiver stations or systems (BTS) **701** for communicating with the mobile stations (wireless phones). Each BTS is connected to base station controller (BSC) **703** for control and management of the BTS, which is proximately located. BTS **701** might consist of one or more transceivers at a single location. BSC **703** is, in turn, connected to mobile service switching center (MSC) **705**, which provides switching functions for the wireless phones within the geographic area associated with MSC **705**. Operation, administration, maintenance & provisioning (OAM&P) system **708** keeps the wireless system described thus far functioning on a day to day basis. OAM&P monitors the health of all network elements, adds or removes equipment, tests software and hardware, diagnoses problems. Operational support (70X) systems (OSS) track subscribers' usage of telecommunications resources and bill subscribers. In an effort to provide quality wireless services to a broad base of clients, OSS **707** and OAM&P **708** interface with a plurality of client accounts **706** directly, using post-paid options for billing customers for wireless services provided, and also through pre-paid platform **704**. Pre-paid platform **704** provides clients with a pay-as-you-need option for wireless services. Conversely, pre-paid platform 704 provides WSP **702** with a choke point to limit subscriber access to the wireless network.

Pre-paid services give clients complete control over the amount of wireless service they purchase as services are pre-allocated to a pre-paid account in the pre-determined amount. Pre-paid clients do not receive unwelcome or outrageously high wireless service bills as can sometimes occur with the post-pay option. Also, the pre-paid service option allows credit-challenged potential clients to enjoy the benefits of wireless communications, which may not have been previously available to them through the post-pay option. Furthermore, the pre-pay option provides other benefits in that the expense for both the provider and the subscribers associated with establishing user accounts is reduced because, in many instances, the only subscriber information needed to establish a pre-paid account is a valid wireless phone number.

Wireless pre-paid service works like a debit card. Subscribers pre-pay for the service, and the WSP reduces the subscriber's account balance at the time a phone call is made. Pre-paid solutions are either service control point (SCP) based, handset based, or network based. They offer sophisticated, real time methods of tracking the use of airtime and decrementing the account balance of the subscriber. Pre-paid is already a successful model for selling telecommunications products, like long distance phone calls, wireless minutes and data transmissions. Pre-paid is a powerful tool in selling wireless service to the credit-challenged population (i.e., people with a not-so-perfect credit history). This segment of the population is credit deficient, not necessarily cash deficient; and pre-paid wireless accounts allow the WSP to successfully market its services to this class of customers.

OAM&P system **708** is resolutely administered by WSP **702**. OAM&P system **708** interfaces directly with post-pay clients through accounts **706**, much as vendors, such as retailer **720** and re-seller **750** interface with their respective customers **722** and **732** through corresponding legacy transaction and billing systems **724** and **734.** In an effort to further the bases of their respective core products and services, retailer **720** and re-seller **730** desire an interface to the OAM&P system **708** of WSP can market wireless services and products to their customers **722** and **734** as if they are WSPs. Unfettered accesses to OAM&P system **708** gives vendors the control they desire for instantaneous activation and maintenance of customer accounts using their own legacy systems.

Unfettered access to a WSP's OAM&P system is, of course, totally unacceptable to the WSP. The control center of the network of WSP **702** is OAM&P system **708**. Aside from security issues involved in allowing an outside entity access to the control center of a company, allowing vendors to autonomously activate and deactivate wireless accounts/phone numbers would create a service allocation and support nightmare for the WSP.

What is needed is an open vendor account administration, maintenance and permissioning (OVAAM&P) system which will give vendors limited access to and control of wireless services and products formerly under the direct control of the WSP, while allowing the service provider to maintain complete control of the OAM& P system, enabling the WSP to accurately gauge prospective usage and ensure secure business-to-business communications. The present invention discloses an OVAAM&P system and, in a preferred embodiment, provides to WSPs a platform for conducting secure transactions relating to the sale of wireless minutes over the Internet. While the description of the present invention is utilizes "minutes" as a unit of measure for wireless communication, one of ordinary skill in the art would realize other units of measure might be utilized. For instance, wireless transmissions might be measured data units such as in kilobits (KB) or megabits (MB) rather than in minutes. The use of data units allows for the sales of data transmissions in addition to voice communications, thereby broadening the appeal of the present invention. The OVAAM&P, in accordance with the present invention, is a business-to-business e-commerce solution that provides a message-based interface for management of a pre-paid wireless service. Based on open and secure IP technology, OVAAM&P allows WSPs to electronically couple their pre-paid systems with the legacy transaction processing and billing systems of business partners. By coupling to the service provider's pre-paid system rather than directly to their OSS system, the service provider insures an extra measure of security afforded by pre-paid account activation, as well as a certain measure of usage predictability from the pre-paid transaction mode.

This electronic coupling allows retail/wholesale monetary transactions executed at a vendor's point of sale (POS) to be automatically propagated to respective subscriber accounts on a pre-paid system operated by a WSP. The system also allows propagation of non-monetary transactions relating to the maintenance of one or more subscriber accounts between the vendor's system and the WSP's pre-paid platform. OVAAM&P allows WSPs to enter into innovative marketing alliances with business partners and quickly set up cost effective retail/wholesale/reseller distribution channels based on the pre-paid service model. Furthermore, OVAAM&P allows WSPs to proliferate marketing/distribution channels, shift the cost of service/handset subsidization to partners, and reduce marketing and retailing costs.

As mentioned above, the present invention allows a vendor to transact directly with the WSP's pre-paid platform. Pre-paid billing systems have two main features: applying deposits to the subscriber's account when customers pre-pay; and decrementing the account balances according to a rating plan when subscribers use the service. The present invention opens up this interface to the Internet and to vendors that have access to it (virtually all vendors). The message-based protocol implemented by the present invention allows the management of a pre-paid account via a secure encrypted internet message exchange between the vendor's legacy transaction processing and billing (TP&B) system and the WSP's pre-paid platform. The WSP's business partners (i.e., the vendors) manage the credit balance of a subscriber's pre-paid account. The operator's responsibility is to simply provide service to a subscriber when an account balance exists, and to deny service when there is a zero account balance.

Vendors typically have a proprietary transaction processing and billing system that they use to conduct POS transactions and to bill customers for goods and services. The OVAAM&P system uses application programming interfaces (APIs) so that vendors can adapt their legacy systems to communicate with the WSP's pre-paid platform.

Furthermore, the present invention allows more flexibility in marketing, faster setup of relationships, and lower operational overhead associated with processing transactions conducted by the vendors. Vendors may be resellers who have a direct relationship with consumers, and they may have a presence in high traffic areas, both in the physical world and in cyberspace. Vendors may be owners of successful brands (telecom related or unrelated) and may seek to leverage their brand image to extend their reach into the wireless services arena. Vendors may want to implement reward schemes for their loyal customers. For instance, a preferred embodiment of the present invention allows a vendor to deposit monetary rewards into a customer's wireless pre-paid account.

An electronic coupling feature of the present invention provides a number of benefits to both the WSP and the vendor. For the WSP, the present invention proliferates retail/reseller/distribution channels while lowering marketing and operational costs. The present invention provides secure coupling and real time transaction response between WSP and vendor systems. Also, because the coupling is accomplished without abandoning old equipment at the vendor's site, establishment of marketing alliances are set up within a week or so instead of taking weeks, months or years. For the vendor, the present invention reduces operational costs, enhances relationships with customers, and essentially creates the vendor's opportunity to maintain its own pre-paid programs. The present invention allows vendors to exploit their existing customer bases (usually non-telecom customers) by offering telecommunications services not previously available from the vendor, and even to implement reward programs that offer loyal customers free/pre-paid phone calls. For the subscriber, the present invention offers recharge convenience, more retail outlets (i.e., access), and reward programs which grant free airtime minutes based on the customer's loyalty to the vendor.

The pre-paid model allows operators of wireless services to receive payment before services are rendered, thereby bypassing the need for checking the creditworthiness of new subscribers and, consequently, lowering operational costs, including those associated with monthly mailing of billing statements. The present invention is designed to solve other issues faced by WSPs as well, such as: proliferation of retail channels, reduction of marketing costs, recharging convenience; and inventory/security management of recharge vouchers, as will be discussed in detail below with respect to the figures. The present invention also enhances the marketability of wireless infrastructure by making airtime a currency.

By opening up the pre-paid platform to the Internet, the present invention allows the wireless service operator to proliferate retail channels. Using the transaction processing afforded by the present invention, a retailer/reseller and WSP can transact business over the Internet, via open, secure technologies like secure electronic transactions (SET). To couple their retail systems to the WSP 's pre-paid platform, retailers/resellers need make only minimal changes to their legacy transaction processing and billing systems. Reseller-wireless provider relationships can be established and made operational within weeks, rather than months or years. In so far as the present invention is concerned, pre-paid platform **704** is the basis of the WSP's billing infrastructure for implementing the present invention.

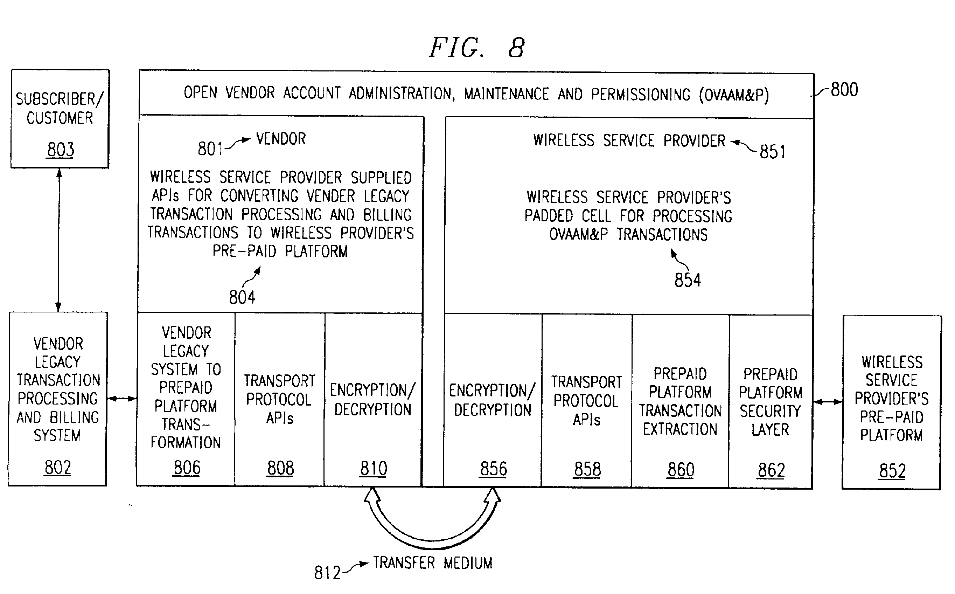

**Figure 8** is a block diagram depicting the components of an OVAAM&P system **800** in accordance with a preferred embodiment of the present invention. Prior to conducting business with a WSP, vendors enter into an agreement for pre-paid wireless service. System **800** represents a system and method for interconnecting a wireless pre-paid platform to any vendor via a public network/internet or private network, which allows disparate transaction processing and billing systems to interact. The system also enforces security features, whereby a vendor can conduct permitted operations in restriction from other operations; and it allows the creation and management of service plans and customer accounts. It is expected that the vendors prepay a fee, in return for which the WSP allocates control over a certain number of phone numbers and/or airtime to the vendor.

Thus, vendor **801** can sell wireless products and services to its customers at its various locations. After a customer transaction, the vendor transfers a message including the transaction information through a transfer medium **812**, such as the Internet, to WSP **851**. From the perspective of vendor **801**, OVAAM&P **800** is effectively transparent, allowing vendors what would seem to be direct access to WSP's pre-paid platform **852** using existing TP&B system **802.**

From the perspective of WSP **851**, OVAAM&P **800** provides both a buffer and security for pre-paid platform **852**. OVAAM&P **800** initially authorizes only legitimate transactions with valid vendors, and then legitimate transactions are passed on to pre-paid platform **852.** As with all of the WSP's pre-paid accounts, WSP's pre-paid platform **852** ensures that a vendor's account has the prerequisite funds for the transaction, conducts the transaction, and debits the vendor's account for the fees associated with the transaction. One key to conducting successful business-to-business transactions is the manner in which the individual components of OVAAM&P system **800** provide the necessary functionality to both business partners without requiring investments for retraining personnel, upgrading legacy systems, or modifying existing pre-paid platforms, including increasing intra-system security.

The primary function of the present invention is to allow vendor's legacy transaction processing and billing system **802** to conduct business-to-business transactions with WSP's pre-paid platform **852**. In accordance with the present invention, the vendor is provided with routines, applications or APIs **806** for transforming transactions created by the vendor's legacy system **802** into messages or transactions supported by the WSP's pre-paid platform **852**.

Transformations **806** may also include means for improving vendor's legacy transaction documents into a universal electronic data interchange (EDI) format for the exchange of standardized document forms between computer systems for business use. EDI is part of electronic commerce. EDI is most often used between different business partners and uses some variation of the ANSI X12 standard (USA) or EDIFACT (UN-sponsored global standard). However, traditional EDI formats for transferring documents of the Internet using simple mail transfer protocol (SMTP) or file transfer protocol (FTP) are both expensive to implement and complicated to use. Recently, activities have been underway to supplement or replace standard formats with formats such as standard generalized markup language (SGML) (in the SGML-EDI initiative) and, still more recently, with extendible markup language (XML). Of course, transformations **806** also give a vendor the capability to transform messages from WSP **851** into legacy system **802** messages.

Also provided for the vendor's use is transport protocol APIs **806** for converting messages to a protocol, such as those described immediately above, which are agreed upon by both the vendor and the WSP in advance. Finally, implementation of the OVAAM&P system provides for encryption and decryption **810** for securing the transmission of transaction messages between vendor **801** and service provider **851**. One possible encryption type is public key encryption, where each business partner gets a pair of keys, called the public key and the private key. Each business's public key is available to the other partner while the private key is kept secret. For example, a message intended for the WSP is encrypted using the WSP's public key, and can only be decrypted by using the WSP's (secret) private key. In another preferred embodiment, this could also be used in conjunction with a digital signature. A flexible encryption scheme, such as public key encryption, allows the WSP to establish many secure business-to-business relationships with different partners because, while the business partners could not decode each other's messages, the WSP could decode all incoming messages using only a single decryption key. Messages are sent to the WSP by some transfer medium **812**, such as a secure network or the Internet.

From the perspective of WSP **851**, the preferred embodiment of the present invention effectively forms a padded cell **854** around pre-paid platform **852**, for protecting the integrity of pre-paid platform **852** and for processing transactions from vendor **801**. This padded cell includes encryption and decryption capability **856** for decoding messages from the vendor and for encoding transaction responses to be transferred to the vendor. Also provided are transport protocol APIs **858** for converting messages to and from a transport protocol agreed upon by both the vendor and the WSP. Pre-paid platform transaction extraction capability **860** allows WSP **851** to extract pre-paid platform-compliant transaction messages from standard message formats. Finally, the padded cell includes a pre-paid platform security layer 862 for maintaining the integrity of the wireless provider's pre-paid platform **852**. Clearly, some additional security might be needed to protect the pre-paid platform from malicious arts of others who are attempting to penetrate the pre-paid platform. Disgruntled employees of vendors, or vendors lacking valid and/or active accounts may have access to the encryption public keys and transport protocols and, thus, attempt to hack pre-paid system **852** in order to obtain free airtime. A series of simple checks performed by security layer **862** eliminate pre-paid platform **852** from handling messages with unauthorized codes, or commands or messages from senders that have committed a series of previous infractions.

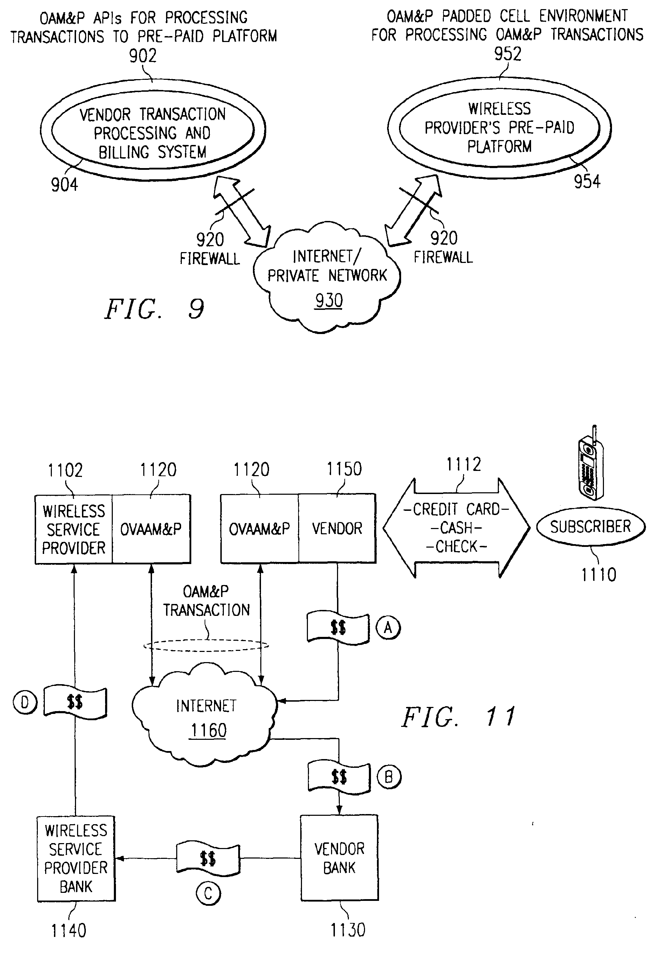

**Figure 9** is a block diagram depicting a relationship between a vendor and a WSP, utilizing OVAAM&P system **800** in accordance with a preferred embodiment of the present invention, vendor legacy transaction processing and billing system **904** is encompassed by WSP APIs for processing transactions to pre-paid platform **902**. Transaction messages are transferred through vendor's firewall **920,** through an internet/private network **930**, and through firewall **902** of the WSP. Before entering WSP's pre-paid platform **954**, the transaction message is processed by padded cell **952** in accordance with a preferred embodiment of the present invention.

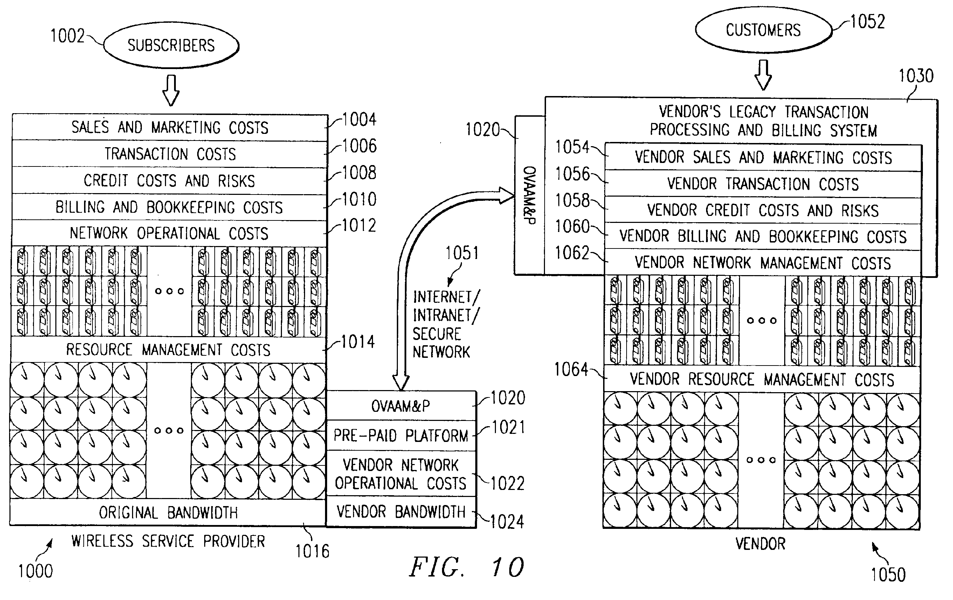

Referring now to **Figure 10**, it is a block diagram depicting a business-to-business transaction relationship for wireless services in accordance with a preferred embodiment of the present invention. As discussed with respect to **Figure 1** above, WSP **1000** conducts business with core subscribers **1002** and incurs certain sales and marketing costs **1004**, transaction costs **1006**, credit costs and risks **1008,** and billing and bookkeeping costs **1010** in the course of conducting that business. In operating the wireless network, WSP **1000** also incurs normal network operation costs **1012** and resource management costs **1014** from the allocation of phone numbers for original bandwidth **1016**.

In the diagram depicted by **Figure 10**, service provider **1000** has deployed additional bandwidth **1024**. Alternatively, bandwidth **1024** may be a portion of existing network bandwidth that the service provider has chosen to allocate to a vendor rather than to sell outright. WSP **1000** incurs additional costs **1022** for operating with the vendor's network, but these costs are more than offset by profits from transactions with vendor **1050**. In the depicted example, vendor **1050** has been allocated a predetermined number of phone numbers and/or airtime (or some other wireless service) from WSP **1000.** In establishing the business-to-business relationship, the vendor pre-pays the service provider for the allocation of numbers. In return, the vendor receives control of the phone numbers and/or airtime to sell or distribute as the vendor sees fit. As discussed above with respect to **Figures 1** through **3**, once vendor **1050** incorporates the wireless product and service offerings into its own core business, the associated costs are incurred by the vendor. In this case, the costs include sales and marketing **1054**, transaction costs **1056**, credit costs and risks **1058**, and billing and bookkeeping costs **1060** associated with selling the wireless products and services.

It is important to note here the significant mutual advantages to both the WSP and the vendor in this propitious division of responsibilities. The vendor accepts primary responsibility for sales and marketing, which are a vendor's areas of expertise and, therefore, relatively less costly to the vendor. At the same time, the vendor is able to add a significant product to its line without bearing the costs associated with operating the wireless service, which is in fact the WSP's area of expertise. Additionally, of course, the vendor incurs some network management costs **1062**, and resource management cost **1064**.

Although WSP **1000** provides the majority of network management, some cost is incurred by the vendor for the vendor's allocated bandwidth. With control of the resource comes the responsibility to manage the bandwidth effectively and efficiently, thus maximizing potential profits.

An important aspect of the present invention is that, in dealing with customers **1052**, vendor **1050** maintains its legacy transaction processing and billing system TP&B) **1030**. In a preferred embodiment of the present invention, the vendor conducts all business transactions with the WSP through the familiar TP&B system used by vendor **1050** for all transactions with customers **1052**. In the depicted example, OVAAM&P system **1020** interfaces between vendor's legacy TP&B system **1030** and the transfer means, i.e., the Internet, an intranet, or some secure net **1051**. Likewise, OVAAM&P system **1020** interfaces between transfer means **1051** and wireless provider's pre-paid platform **1021**.

**Figure 11** is a block diagram illustrating a transfer of funds in accordance with a preferred embodiment of the present invention. In the manner discussed above, vendor **1150** conducts a transaction with customer **1110** regarding wireless products or services. The transaction between vendor **1150** and customer **1110** is performed normally, with a vendor receiving funds in the form of credit card, cash, or check **1112** for the wireless services. As discussed immediately above, the vendor's legacy TP&B system utilizes OVAAM&P system **1120** to transfer transaction messages via Internet **1160** to WSP's OVAAM&P system **1120**. The transaction is then processed by the WSP's pre-paid system (not shown). Although many modes are possible for transferring funds from vendor **1150** to WSP **1102,** it must be understood that the basis of the current invention is an operable, pre-paid platform supported by WSP **1102**. Because vendor **1150** has been pre-allocated products and services by WSP **1102**, the subscriber transaction is completed instantaneously. However, WSP **1102** immediately debits the vendor's pre-paid account for the cost of the services. In order to replenish the account, vendor **1150** sends a message, represented by "A" in the depicted figure, through Internet **1160**, which is delivered to vendor's bank **1130** as message "B." The message allows the transfer of funds from vendor's bank **1130** to WSP's bank **1140**. In the depicted example, message "C" is shown flowing directly from vendor's bank to WSP's bank; however, message "C" may pass through Internet **1160** or any other network. Finally, WSP's bank **1140** sends message "D" to WSP **1102**, indicating that funds have been successfully transferred from vendor's bank **1130**. WSP **1102** then replenishes the vendor's pre-paid account with the amount of the funds transferred. Additionally, using a preferred embodiment of the present invention, WSP **1102** sends a message indicating funds have been replenished to the vendor's pre-paid account using OVAAM&P system **1120.** The vendor receives the message through OVAAM&P system **1120,** which is immediately converted to the vendor's legacy TP&B system.

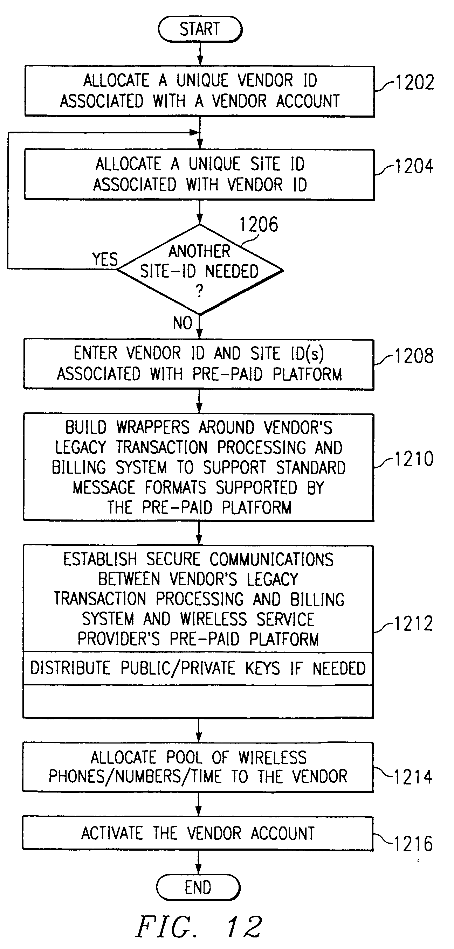

**Figure 12** is a flowchart depicting the process by which a WSP establishes a business association with a vendor. This flowchart, as well as all of the other processes described herein, are implemented in accordance with a preferred embodiment of the present invention, such as, for example, that described with respect to **Figure 8** above. Initially, a WSP allocates a unique vendor identification associated with a vendor account (step **1202**). Because many vendors have multiple locations, indeed may be multi-national, a number of unique site IDs may be associated with a single vendor ID (step **1204**). Obviously, once the vendor ID has been established, the vendor may, at any time, add another site ID (step 1**206**). In that case, the process merely flows back to step **1204.**

The vendor information is then entered into the WSP's pre-paid platform database (step **1208**). Next, wrappers are built around the vendor's legacy TP&B system to support standard message formats supported by the service provider's pre-paid platform (step **1210**). Normally, the WSP would provide customized APIs for converting transactions and messages supported by the vendor's legacy system to message formats supported by the service provider's pre-paid platform. However, other programming means are well known by those of ordinary skill in the art and may be employed for this function.

Next, secure communications between the vendor's legacy system and the wireless provider's pre-paid platform are established (step **1212**). Although many secure transmission means are available, an important means is through the distribution of public and private keys described in detail above with respect to **Figure 8**. It is expected that the vendor will transfer funds to the WSP and, in response, the service provider will allocate a pool of phones/numbers/time to the vendor (step **1214**). Of course, as in any business relationship between two entities, the exact conditions need not be fixed. The WSP may allocate a pool of phones/numbers/time to the vendor on some other basis than cash. After the allocation, the vendor account is activated by the WSP (step **1216**), and the process ends.

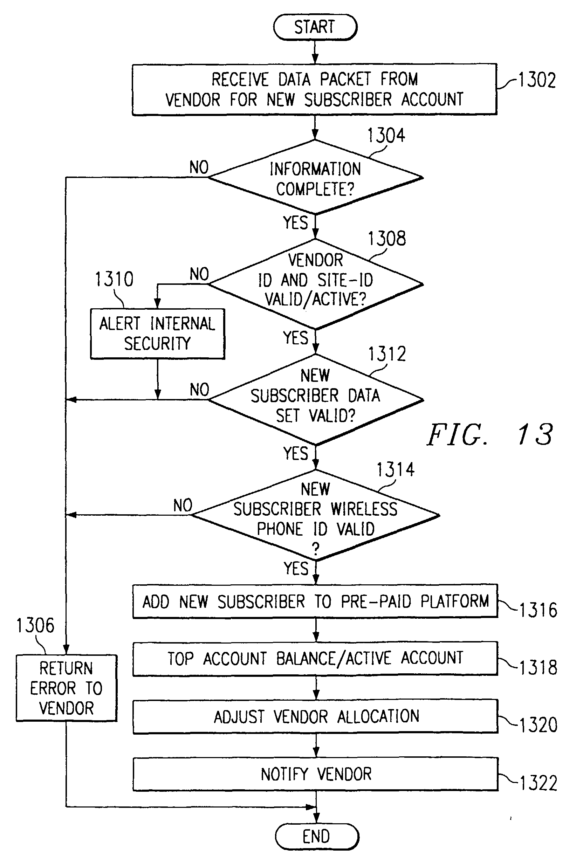

**Figure 13** is a flowchart depicting the process by which the service provider processes a transaction for setting up a new subscriber account from the vendor. Previously, the vendor account has been established. The WSP receives a data packet from a vendor, which includes a transaction for a new subscriber account (step **1302**). Prior to establishing a new account in the wireless provider's pre-paid platform, the transaction is checked for completeness (step **1304**). If crucial information concerning the transaction is incomplete, an error is returned to the vendor (step **1306**), and the process ends. Otherwise, the process flows to step**1308**, where the vendor ID and site ID are checked for validity. If the account is either invalid or inactive, the WSP's internal security is alerted (step **1310**). At that point, an error may be returned to the vendor (step **1306**), and the process ends.

Assuming a valid and active account, the new subscriber data is checked for validity (step **1312**). Although the amount of information needed by the wireless provider for a pre-paid account may be somewhat less than what is needed for a post-paid account, government regulations and internal security require at least a minimum of subscriber information. If the transaction contains less than the required amount of new subscriber information, an error is returned to the vendor (step **1306**), and the process ends. Otherwise, the process flows to step **1314**, where the new subscriber wireless phone ID is checked for validity. If the new subscriber's phone does not have a valid phone number or identification for the wireless provider's network, an error is returned to the vendor (step **1306**). Otherwise, the new subscriber is added to the wireless provider's pre-paid platform database (step **1316**). The pre-paid platform tops up the account balance to the level indicated in the data packet, and the subscriber account is activated (step **1318**). Next, the vendor allocation is adjusted for the amount of the new subscriber account (step **1320**). Finally, the vendor is notified that the transaction has been completed (step **1322**). Additionally, the WSP typically sends a greeting message, either voice or text, to the newly activated wireless phone, including a cordial greeting, welcome to the network, and account balance information.

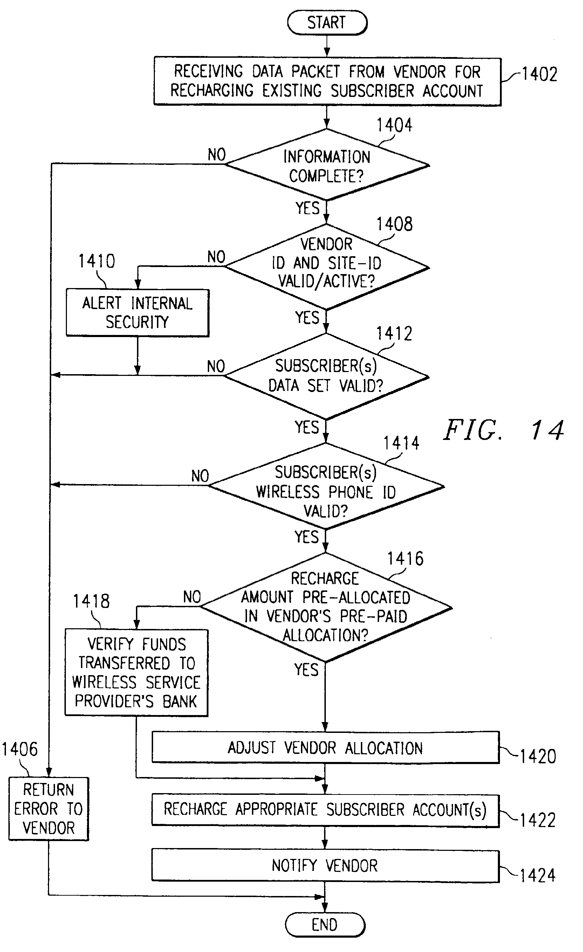

**Figure 14** is a flowchart depicting a process for recharging an existing subscriber account in accordance with a preferred embodiment of the present invention. Again, previously the vendor and the service provider have established a business association. The process begins with the service provider receiving a data packet from the vendor including a transaction for recharging an existing subscriber account (step **1402**). The data in the packet is checked for completeness (step **1404**). If the data is not complete, the WSP returns an error to the vendor (step **1406**), and the process ends. Otherwise, the process flows to step **1408**,where the vendor's ID and site ID are checked for validity and activity. If either ID is found to be invalid or inactive, the WSP's internal security is alerted (step **1410**), and an error may be returned to the vendor (step **1406**). The process would then end.

If the vendor IDs are valid and active, the subscriber's data set is checked for validity (step **1412**). At this point, it must be noted that the transmission may be one of synchronous or asynchronous mode with the business transaction. That is to say, the data packet may contain only a single subscriber's transaction data, i.e., synchronous with the business transaction occurring at the vendor's point of sale while the customer waits, or instead the data packet may contain a number of subscribers' transactions sent at the end of a business day (i.e., asynchronous). This flowchart specifically embodies the synchronous mode of processing customer transactions. If one or all of the subscriber data sets are not valid, an error is returned to the vendor (step **1406**). If no valid subscriber data sets remain for processing, the process ends. Next, a subscriber's (or subscribers') wireless phone ID is checked for validity (step **1414**). If any of the subscribers' phone IDs are found to be invalid, an error is returned to the vendor (step**1406**).

Next, a determination is made whether the recharge amount is pre-allocated in the vendor's pre-paid account (step **1416**). If the vendor's pre-paid allocation is sufficient to recharge the subscriber account(s), the vendor's allocation is adjusted (step **1420**) and they are recharged (step **1422**). If, on the other hand, the vendor's pre-paid account does not contain sufficient funds for recharging the subscriber accounts, the WSP must verify that the appropriate funds have been transferred into the service provider's bank (step **1418**). Then, the appropriate subscriber accounts are recharged (step **1422**). The vendor is then notified of the transaction (step **1424**), and the process ends.

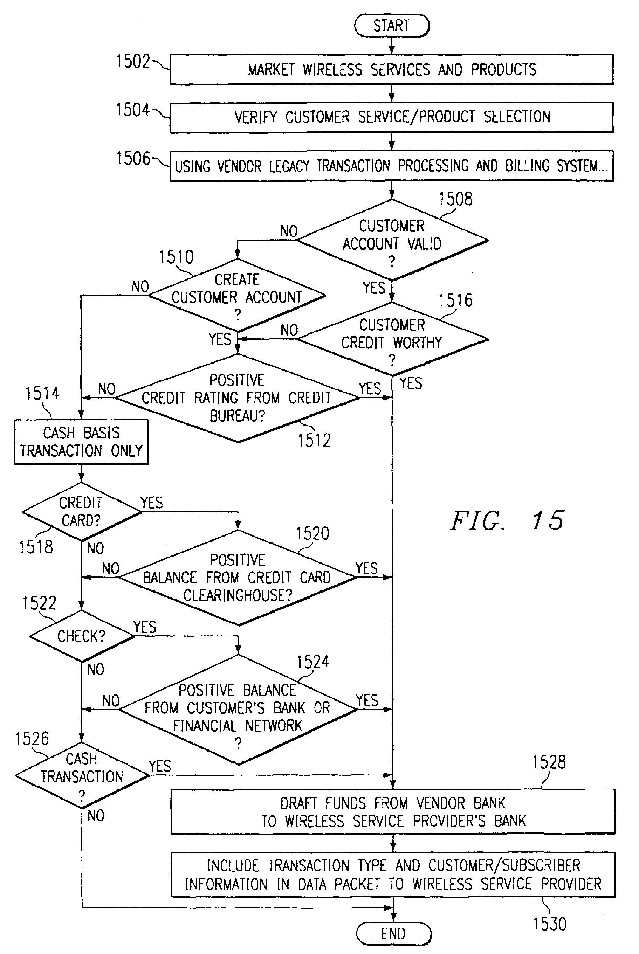

**Figure 15** is a flowchart depicting a vendor processing a vendor transaction using the OVAAM&P system in accordance with a preferred embodiment of the present invention. The process begins with the vendor marketing wireless service and products based on the established business relationship with a WSP (step **1502**). The vendor verifies the customer service and/or product selection, as is customary in any vendor/customer relationship (step **1504**). Using the vendor legacy TP&B system, the vendor processes the customer transaction (step **1506**). The normal process proceeds as follows. Initially, the vendor checks to see that the customer has a valid account with the vendor (step **1508**). If the customer has a valid account, the customer's creditworthiness is checked for the increased amount of the purchases on the account (step **1516**). If the customer's account will support the purchase, the vendor authorizes the vendor's bank to draft funds to the WSP's bank (step **1528**).

Returning to step **1508**, if the customer does not have a valid account, the vendor takes the initiative to create a customer account (step **1510**). If the customer is unwilling, then the transaction must proceed on a cash basis (step **1514**). The basic process proceeds as follows. Generally, the vendor offers to accept a credit card from the customer (step **1518**). If the customer intends to pay with a credit card, the vendor then checks with the credit card clearinghouse to see that the customer indeed has a positive balance on the credit card (step **1520**). If so, the process flows again to step **1528**, where the vendor authorizes funds to be drafted from the vendor's bank to the WSP's bank.

If the customer does not intend to use a credit card, or results from the balance inquiry to the credit card clearinghouse are negative, the vendor may instead offer to accept a check in payment (step **1522**). If the customer intends to pay with a check, the vendor contacts the customer's bank or an account verification service to check the status of the customer's checking account (step **1524**). If the results of the inquiry indicate either a positive balance in the account or an active account, the vendor authorizes funds to be drafted from the vendor's bank to the WSP's bank (step **1528**). If the results are negative, the transaction must be conducted in cash (step **1526**), or the process ends. If the customer proffers cash, the vendor authorizes funds to be transferred from the vendor's bank to the WSP's bank (step **1528**).

Returning to step **1516**, if the customer's account does not have a sufficient balance to cover the transaction, the customer's credit line can, of course, be increased. In that case, the vendor contacts the credit bureau or like institution in order to better estimate an appropriate account limit for the customer (step **1512**). If the new account limit is sufficient to allow for the transaction to be completed on the customer's account with the vendor, the vendor authorizes funds to be drafted from the vendor's bank account to the WSP's bank (step **1528**). If the report from the credit bureau does not provide a sufficient basis for increasing the limit of the customer's account with the vendor, then the transaction must proceed on a cash only transaction basis (step **1514**), as described above.

Returning to step **1528**, assuming the customer and vendor have agreed on payment, and the funds have been allocated from the vendor's bank to the WSP's bank, the vendor then includes a transaction type and customer/subscriber information into data packets using the vendor's legacyTP&B system, and the data is transferred to the WSP (step **1530**). The process then ends.

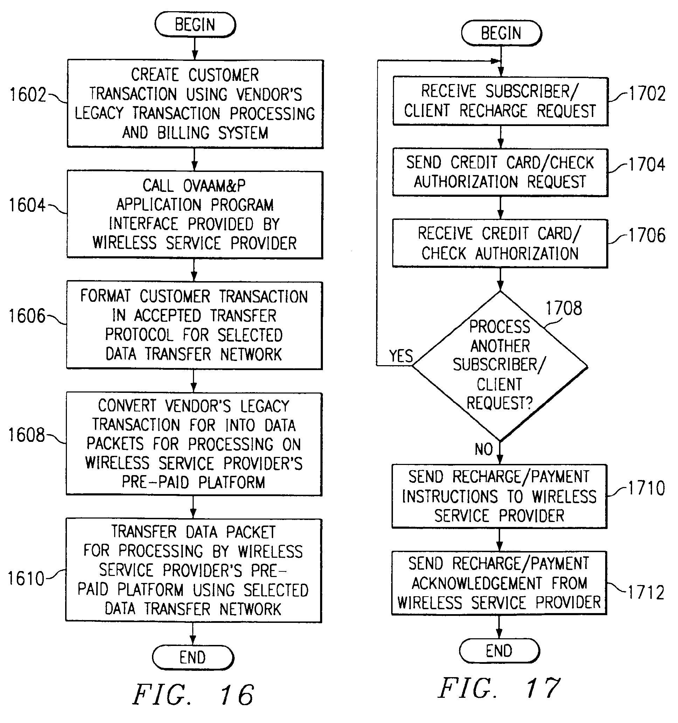

**Figure 16** is a flowchart illustrating the process by which a transaction is processed by the vendor using the OVAAM&P system in accordance with a preferred embodiment of the present invention. An important aspect of the present invention is that, to the vendor and the vendor's employees, creating a transaction to be processed by the WSP's pre-paid platform is transparent, in that the vendor need not understand or even be familiar with the WSP's pre-paid platform. The vendor or vendor's agent(s) merely enter data in the normal manner for customer information regarding a pre-paid wireless transaction, as would be routine for all other transactions between the vendor and the vendor's customers.

The process begins by creating a customer transaction using the vendor's legacy TP&B system (step **1602**). In the background, OVAAM&P APIs provided by the WSP are called (step **1604**). Using the APIs provided by the WSP, the customer transaction is formatted into an accepted transfer protocol for the selected data transfer network, without any intervention from the vendor (step **1606**). Next, the APIs provided by the WSP convert the vendor's legacy transactions into data packets for processing on the WSP's pre-paid platform (step **1618**). If an unsecured network is to be used, the data packets are encoded using the mutually agreed upon encryption system (not shown). The data packets are then transferred for processing by the WSP's pre-paid platform, using the selected transfer network (step **1610**). The process then ends.

Another important aspect of the present invention is the convenience the OVAAM&P system provides for customer recharging of a limit on the customer's account. Previously, the customer was required to somehow contact the customer's WSP to conduct a transaction. While, many times, this could be conducted by a mere telephone call, certain customers would require a personal appearance at a WSP designated site in order to provide personal information or to disburse cash or a personal check. This was particularly inconvenient for the customers, especially the credit-challenged customers who could not take time from a normal work day in order to recharge their customer accounts. By using the OVAAM&P system in accordance with a preferred embodiment of the present invention, the subscriber/client benefits from the ability to pay at more convenient vendor locations, using a vendor account for credit, even though the wireless account may be a pre-paid account. And finally, for those customers who are wary of giving credit card information over the phone, the present invention provides a definite advantage.

**Figure 17** is a flowchart depicting asynchronous processing of requests from subscribers/clients to recharge their accounts with their WSPs at a vendor location using the OVAAM&P system in accordance with a preferred embodiment of the present invention. The process begins with a vendor receiving a subscriber/client recharge request (step **1702**). As noted above, by allowing the subscriber to interact with a vendor, the subscriber is given a number of different payment options not normally available to the subscriber unless the subscriber visits the WSP's designated location. In this case, the subscriber intends to pay by check or credit card, which would not be possible or secure in a telephonic transaction with a wireless provider. It is then the vendor's responsibility to send a credit card or check authorization request to the appropriate verification bureau using the vendor's legacy TP&B system (step **1704**). The vendor then receives authorization through the legacy system (step **1706**).

Because the depicted process is asynchronous, the transaction may not be immediately transferred to the WSP. It may, instead, be batched with other subscriber transaction requests. In that case, the process would flow again to step **1702** to receive new subscriber/client recharge requests. At some point, usually based on either set transfer times or transaction queue capacity, the vendor sends recharge/payment instructions to the WSP (step **1710**). The vendor then receives recharge and payment acknowledgements from the WSP (step **1712**), and the process ends.

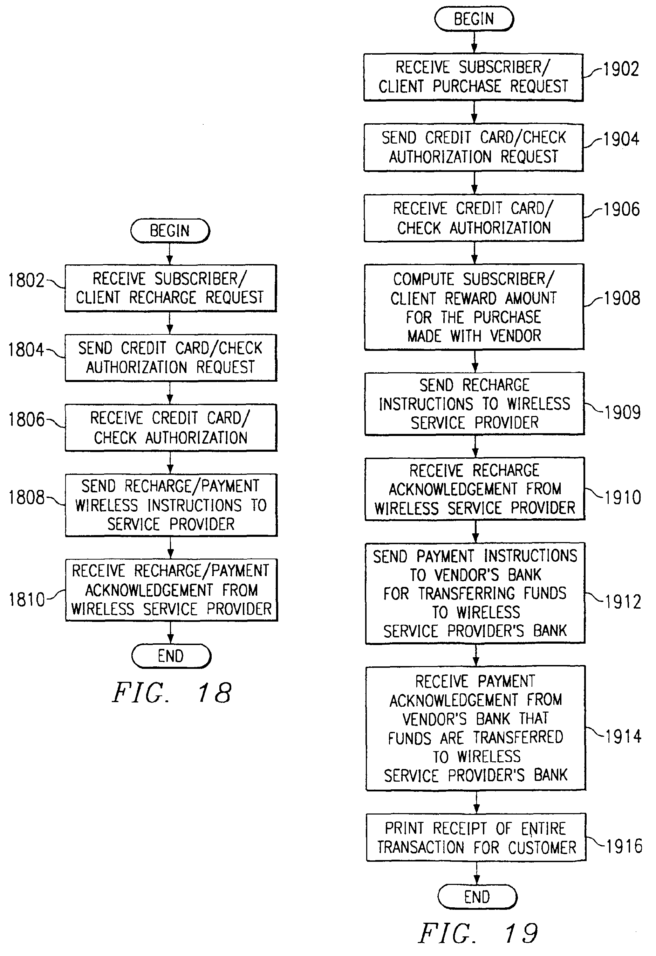

In contrast to the flowchart depicted in **Figure 17, Figure 18** is a flowchart depicting the synchronous processing of requests from subscribers/clients to recharge their accounts with their WSPs at a vendor location using the OVAAM&P system in accordance with a preferred embodiment of the present invention. The process is identical to the above-described process in that a subscriber/client recharge request is received (step **1802**), the vendor sends a credit card or check authorization request (step **1804**), and the vendor receives authorization through the legacy system (step **1806**). In contrast to the asynchronous processing described above, in the case of synchronous transactions, once authorized, recharge/payment instructions are transferred immediately to the WSP's pre-paid platform, synchronized with the business transaction between the subscriber/client and the vendor (step **1808**). As before, the vendor then receives recharge/payment acknowledgement from the WSP (step **1810**), and the process ends.

Another important aspect of the present invention is that the business-to-business relationship between a WSP and a vendor gives the vendor the option to issue rewards and incentives to customers in the form of free airtime minutes from the wireless provider. A reward program would be similar to cash reward programs in that the vendor can encourage the user of the vendor's products and services by rewarding loyal customers with free airtime for wireless calls. As an example of an airtime reward program, consider a holiday bonus offer from a local mall vendor. To encourage purchase of big-ticket items, the mall vendor offers a 10-percent discount to customers signing up for the vendor's credit card. As an alternative to the 10-percent discount offering, the vendor may offer a wireless telephone, with the first 100 minutes of airtime free, with subsequent purchases from the vendor earning additional free minutes of wireless service. In making such an offer, the vendor and WSP can divide the cost of the promotion. For example, the vendor might pay for the cost of the wireless phone, and the WSP might offer the initial airtime reward on its network. In addition to the free airtime reward, the consumer could also purchase airtime minutes at any of the vendor's retail outlets, or even refresh the airtime via the vendor's catalog shopping web site.

**Figure 19** is a flowchart depicting a vendor/customer transaction including the issuance of airtime rewards in accordance with a preferred embodiment of the present invention. The process begins with the vendor receiving a subscriber/client purchase request (step **1902**). It is presupposed in this example that the subscriber has previously signed up with the vendor for the airtime reward program. The vendor then processes the purchase request in the normal manner, including sending for credit card/check authorization (step **1904**) and receiving the authorization (step **1906**). The vendor then automatically computes the subscriber/client reward amount for the purchase made with the vendor (step **1908**). With the subscriber/client still at the vendor's payment register, the vendor's legacy system, using the OVAAM&P in accordance with a preferred embodiment of the present invention, sends recharge instructions to the WSP (step **1909**). Nearly instantaneously, the vendor receives a recharge acknowledgment from the WSP (step **1910**).

At this point, the vendor's legacy system authorizes transfer of funds from the vendor's bank to the WSP's bank for recharging the vendor's pre-paid account (step **1912**). The vendor then receives a pre-paid acknowledgement from the vendor's bank, showing that the funds have been transferred (step **1914**). Finally, the subscriber/client receives a printed receipt of the transaction, including the reward amount (step **1916**). Clearly, the printing of the customer receipt can occur any time after the vendor has received a recharge acknowledgement from the service provider (step **1914**) and need not be delayed for payment transfer instructions between banks because authorization from the WSP's pre-paid platform is based on the vendor's pre-paid account balance.

The open vendor account administration, maintenance and permissioning system (OVAAM&P) allows a WSP to create a myriad of different types of business-to-business enterprises with disparate business entities. Such business-to-business enterprises were heretofore unknown in the prior art because previously the business entities were unable to remain independent and viable when functioning in such close economic proximity. Previously, the security constraints needed for assuring the integrity for one business entity, were inflexible and unduly burdensome to its partner. On the other hand, by relinquishing a portion of a corporation's innate control and thereby increasing flexibility toward its business partners, a corporation's core business endeavors could be compromised. In addition to the control and security concerns, prior art business enterprises required an inordinate investment of startup time and capital in order to ensure economic viability of the partners.

In accordance with a preferred embodiment of the present invention the OVAAM&P system provides the security assurances needed for a WSP to relinquish control aspects of its core business to its business partners without jeopardizing its financial viability. The OVAAM&P system interfaces with the WSP's pre-paid platform, thereby allowing the WSP to maintain as much control and security as its native pre-paid platform affords. Also, by utilizing the existing pre-paid platform, up front integration costs are held to a minimum for both partners.

For the WSP's business partner, the OVAAM&P system provides the flexibility needed to compete in the wireless marketplace over any medium, including a virtual one. The business partner is afforded the opportunity to instantaneously allocate and service subscriber accounts, as well as to perform limited services on the WSP's existing WSP subscriber's accounts. Additionally, the OVAAM&P system interfaces with the business partner's legacy system, thereby reducing start up expenses as measured by the cost of system upgrades and employee training.

The OVAAM&P system utilizes WSP-supplied APIs for converting business transactions from the business partner's legacy system to the WSP's pre-paid platform. In so doing, the business partner can then fully integrate the WSP's services and products into its own marketing and sales programs, thereby allowing for effortless point of sale and Internet transactions with customers. The OVAAM&P system also provides for transport protocol APIs, and encryption and decryption for securing all transactions between business partners.

In short, the OVAAM&P system eliminates many of the previous impediments to forming business partnership, which fosters the growth of new and productive business practices that were hitherto unknown in the art. Implementing the OVAAM&P system in accordance with a preferred embodiment of the present invention interconnects the transaction processing and billing systems of two or more businesses with at least one telecommunication provider that offers pre-paid telecommunications services. Even though WSPs may already be business partners with resellers/distributors, the OVAAM&P system allows more flexibility in marketing, faster setup of relationships, and lower operational overhead associated with processing transactions conducted by the vendors. Business partners to the WSP may be vendors, such as resellers who have a direct relationship with consumers. The vendors may have a presence in high traffic areas, both in the physical world and in cyberspace. Vendors may be owners of successful brands (telecom related or unrelated) and may seek to leverage their brand image to extend their reach into the wireless services arena. Vendors may want to implement reward schemes for their loyal customers. These approaches were impossible to implement and, therefore, were unknown prior to the achievement of the OVAAM&P system. The features of the OVAAM&P system set the stage for an entirely new brand of business-to-business cooperation, where cooperating businesses and WSPs can utilize the OVAAM&P system to advance their independent business objectives in a variety of business models.

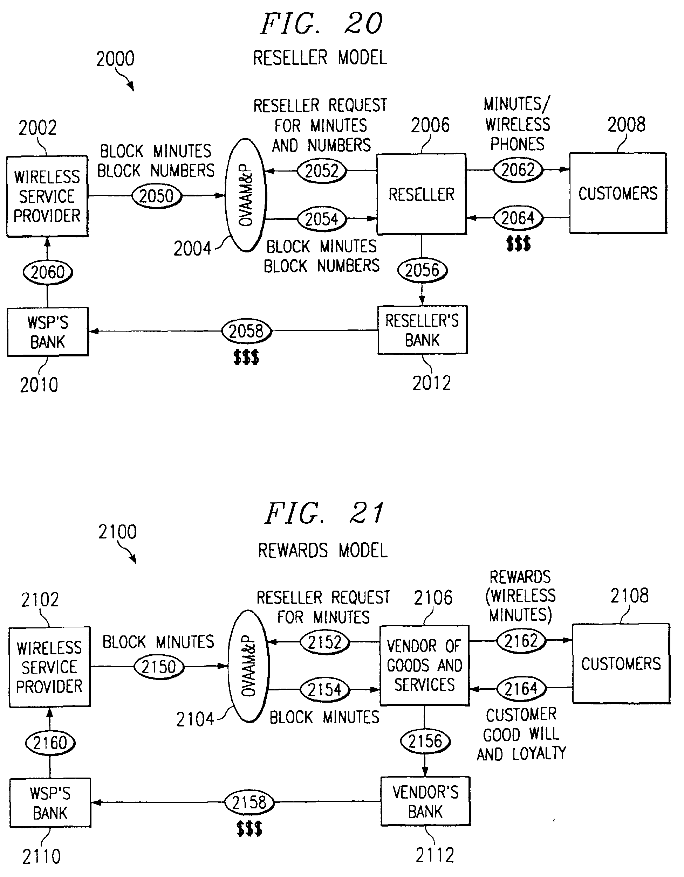

**Figure 20** is a block diagram depicting an innovative business model utilizing an ingenious business-to-business enterprise in accordance with a preferred embodiment of the present invention. The model includes WSP **2002** being linked electronically through OVAAM&P **2004** to reseller **2006**. Reseller **2006** , in turn, services its customers and subscribers, customers **2008**. Cash flow from reseller **2006** to WSP **2002** is accomplished via electronic transfers through reseller's bank **2012** to WSP's bank **2010.**

In accordance with a preferred embodiment of the present invention, reseller **2006** is provided with a means for marketing of WSP's products and services to customers **2008** as though reseller **2006** was the originator of the commodity. Reseller **2006** is afforded the opportunity to use its own legacy TP&B system, while providing instantaneous response to customers **2008** through OVAAM&P **2004**. The access to WSP's **2002** products and services is completely transparent to customers **2008**. The swift responses and easy problem resolution build a loyal customer base for reseller **2006** rather than WSP **2002.**

The business transaction process depicted by reseller model **2000** is based on business-to-business enterprise made possible by OVAAM&P **2004**. There, WSP **2002** and reseller **2006** establish an arrangement for transferring the control of blocks of wireless minutes and telephone numbers via OVAAM&P **2004** represented on **Figure 20** as flow **2050**. Simultaneous to a request for wireless services (flow **2052**), reseller **2006** authorizes reseller's bank **2012** to transfer the funds to cover the transfer (flow **2056**). Reseller's bank **2012** then transfers the funds to WSP's bank **2010** (flow b), which in turn notifies WSP **2002** of the cash transfer. Because OAAM&P **2004** interfaces with WSP's **2002** pre-paid platform, the funds must have be secured by WSP's bank **2010** prior to WSP **2002** transferring control of the blocks of minutes and number (flow **2050**).

After WSP **2002** has allocated the wireless commodities, reseller **2006** retains all control for assignment, distribution, transaction, activation/deactivation, marketing, pricing, and delivery of the wireless products and services. While WSP **2002** maintains control of the operation of the wireless network, it appears to reseller **2006** as if the entire network is at its disposal, at least for the pre-paid blocks of numbers and phones. Coming with the control of the wireless commodities, reseller **2006** is also responsible for the costs associated with the control, such as sales and marketing, transactions, credit, billing, bookkeeping, and resource and network management. However, the establishment of this relationship gives the reseller all the advantages of being a WSP without having to make the capital expenditures necessary for installing and maintaining a physical wireless network. WSP **2002**, on the other hand, increases its subscriber base while simultaneously shifting the focus its of internal resources. Resources that were once needed for marketing and sales can be reallocated to the core business of operating the wireless network.

By having a WSP partner, reseller **2006** is able to develop its own brand of marketing and sales for attracting and maintaining customers **2008** unencumbered by the constraints imposed by operating the wireless network. The marketplace might be physical walk up phone stores, virtual web storefronts, telemarket, or some combination of each. Customer transactions are likewise completely controlled by reseller **2006**. Popular transaction options include, cash, credit, pre-pay or post-pay, all of which are conducted on reseller's **2006** legacy TP&B system. Regardless of the transaction type or the transaction medium, the response from reseller **2006** to customer **2008** is instantaneous.

A typical customer transaction, discussed above in some or all of Figures 15 - 19, proceeds with an exchange of cash or credit from customer **2008** (flow **2064**), for which customer **2008** receives valuable wireless consideration. Unbeknownst to customer **2004**, the same legacy TP&B system transaction with customer **2008**, may be simultaneously transacting with WSP's pre-paid platform in the background. This transaction is discussed in detail in one or both of **Figures 13** and **14**. Several different transactions types are possible, for instance, recharging a customer's account where reseller **2006** transmits a recharge request to WSP **2002** by way of OVAAM&P **2004** (flow **2052**). Another transaction might be merely to assign a wireless number and allocate a time period (flow **2054**) to customer **2008** from the block of numbers and minuets previously allocated from WSP **2002** (flow **2050**). Additionally, a customer transaction may also initiate a daft from reseller's bank **2012** to WSP's bank **2010** for recharging the pre-allocation in reseller's pre-paid account, as depicted in **Figure 14.**

OVAAM&P **2004** provides the protocol necessary to instantaneously apply credit to a pre-paid billing system of WSP **2002** on behalf of which reseller **2006** offers services. OVAAM&P **2004** provides distinct business advantages stemming from the fact that WSP's **2002** pre-paid platform is electronically linked to the legacy transaction processing and billing system of reseller **2006**. On its proprietary transaction processing system, via OVAAM&P **2004**, reseller **2006** can create wireless service plans on the WSP's **2002** pre-paid platform. Credits applied to customer's **2008** account at the reseller's TP&B system are instantaneously applied to the corresponding pre-paid account operated by WSP **2002,** effecting near real time activation of customer accounts. Using

OVAAM&P **2004** including the resident proprietary transaction processing system, reseller **2006** can apply recurring charges (e.g., daily, weekly, monthly) to pre-paid accounts under a particular service plan. Likewise, reseller **2006** can reserve a block of wireless phone numbers to resell to customers under a particular service plan designed by reseller **2006.**

OVAAM&P customer account management enables reseller **2006** to activate the service of a phone number as soon as the sale of wireless service to customer **2008** is rung up at the reseller's point of sale and/or to replenish the balance of a customer's pre-paid account as soon as the sale of additional minutes is rung up at the point of sale. As might be expected, OVAAM&P customer account management also enables reseller **2006** to make an adjustment to the balance of a customer's pre-paid account, correct billing errors, and handle customer dissatisfaction. Additionally, using the proprietary transaction processing system via OVAAM&P **2004,** reseller **2006** can temporarily disable a customer's pre-paid wireless service or sell new service on an old phone number to a new customer.

In other aspects of the OVAAM&P system, WSP **2002** does not immediately debit reseller's **2006** account, but instead only debits the reseller's **2006** account as services are sold to customers **2008**. After an initial lump sum pre-payment, reseller **2006** is free to recharge the pre-paid account at regular time intervals, after each customer transaction, or by any other method the vendor chooses. No prior art technology gives the reseller the flexibility to use a familiar legacy system to simultaneously transact with the customer and the WSP. Presently, the reseller is portrayed as an inconvenient and expensive middleman by the customer, because there is a distinct difference in purchasing wireless services from a reseller.

The OVAAM&P system is an overlay solution to an existing pre-paid platform installed and operated by the WSP, which allows the reseller to market and sell the provider's services seamlessly, hence producing greater return on capital investments for both parties. The WSP is, of course, free to form pre-paid reselling business relationships with multiple resellers, in which case the WSP furnishes standard electronic data interchange (EDI) interfaces to all resellers, as described above with respect to **Figure 8.** Finally, although a preferred embodiment has been described, wherein a WSP is a business partner, other preferred embodiments of the OVAAM&P system apply to, for example, origination-only (local, long-distance, ISP dial-up) and origination/termination (wireless, fixed-wireless, landline) types of services.

**Figure 21** is a block diagram depicting an innovative business model utilizing an ingenious business-to-business enterprise, wherein a customer earns rewards simply for conducting business with a vendor in accordance with a preferred embodiment of the present invention. The rewards to the customer are in the form of wireless services and airtime.

The airline industry has transformed "frequent flyer miles" into a form of currency that it uses to jointly market everything from credit cards to vacations. Using the OVAAM&P system, WSPs are able to leverage their wireless infrastructures and offer airtime as a currency. Just as an airline mile is a reward to the flying customer, an airtime minute is a reward allowing someone to talk wirelessly for one minute. Leveraging the appeal of a wireless phone, vendors from any industry can reward their loyal customers with wireless airtime. These minutes are pre-paid by the vendor. Each time the customer makes a purchase, the vendor applies the appropriate amount of reward dollars (which here translate to airtime minutes) to the customer's pre-paid wireless account.

Similar to the cash reward programs, a vendor can encourage the use of its products and services by rewarding loyal customers with free airtime for wireless calls. As an example of an airtime reward program, consider a holiday bonus offer from a local mall superstore. To encourage big ticket purchases, the superstore offers a 10-percent discount to customers signing up for the superstore credit card. Or, as an alternative to offering a 10-percent discount, the superstore might offer a wireless phone, with the first 100 minutes of airtime free, and subsequent purchases at the superstore earning free airtime. In this situation, the superstore and the WSP can divide promotional costs between them. For example, the vendor might pay for the cell phone, and the WSP could offer the first 100 minutes of airtime on its network. In addition to the free airtime reward for subsequent superstore purchases, the consumer could also purchase minutes of airtime at the superstore's retail outlet, or refresh (i.e., recharge) airtime via, for example, the superstore's catalog shopping web site.

Vendors of many different goods and services can benefit from the implementation of an airtime reward system. For instance, traditional retailers, e-commerce retailers, financial institutions, and even upscale restaurants and grocery stores can build customer loyalty by rewarding valued customers with wireless phone incentives. Normally, the customer has some ongoing relationship with the vendor and signs up for the rewards plan, however, an off-the-street customer may earn valuable rewards as well. Because the OVAAM&P system allows the vendor's sales representative to utilize the familiar legacy system, customer sign-up requests are handled expeditiously, and the rewards are issued immediately afterwards at the point of sale. The technology of the OVAAM&P system enables the vendor to implement an extremely flexible reward plan, as the details of the reward are completely left up to the vendor.

Airtime rewards might be based on a number of different marketing factors, which are important to different customers for contrasting reasons. Importantly, because the reward plan is predicated on the vendor's legacy system customer, rewards are automatically issued with the customer's receipt. The vendor's legacy system makes all the reward calculations, thus relieving the burden on under-skilled sales representatives and reducing potential losses to dishonest employees. In contrast, current reward plans do not reward airtime minutes or wireless services. While airtime vouchers are available to vendors and might be considered for reward incentives, vouchers require a significant investment of time and effort for issuance and tracking by the WSP. Vouchers are not immediately redeemable, as are the rewards issued through the present reward plan, but must be activated by the customer contacting the WSP. Generally, conventional rewards are issued by sales persons or envelope stuffers who are ill equipped to analyze rewards rules at the point of contact with the customer, unlike the OVAAM&P system, which utilizes the vendor's legacy system for calculating the rewards. It is presently impossible to issue instant rewards to a customer's account when the customer interfaces with the vendor through a remote site, such as the Internet. However, because the vendor's legacy system is used for Internet transactions, the rewards are credited to the customer's wireless account immediately following the transaction, just as in the point of sale transaction.

Referring to **Figure 21**, reward model **2100** is similar in many aspects to reseller model **2000** shown in **Figure 20**. Reward model **2100** includes WSP **2102** linked electronically through OVAAM&P **2104** to vendor **2106**. Vendor **2106** provides goods and services to customers **2108.** Cash flow from vendor **2106** to WSP **2102** is accomplished via electronic transfers through vendor's bank **2112** to WSP's bank **2110**.

In addition to the discussion of reseller model **2000,** reward model **2100** provides vendor **2106** with a means for rewarding loyal customers, thereby enticing new customers and building new customer/vendor relationships through the rewarding of valuable rewards, and airtime minutes in accordance with a preferred embodiment of the present invention. Vendor **2106** utilizes its own legacy TP&B system for customer transactions involving its goods and services. However, in the midst of conducting the transaction, customers **2108** are instantaneously rewarded for their patronage. The immediate gratification to a customer's patronage entrenches a loyal customer base for vendor **2106**.

The reward based business transaction depicted by reward model **2100** is enabled by a business-to-business enterprise and made possible by OVAAM&P **2104**. There, WSP **2102** and vendor **2106** establish an arrangement for transferring the control of blocks of wireless minutes (and possibly telephone numbers) via OVAAM&P **2104** (flow **2150**). As discussed above, vendor **2106** authorizes vendor's bank **2112** to transfer the funds to cover the transfer (flow **2156**). Vendor's bank **2112** then transfers the funds to WSP's bank **2110** (flow **2158**) which in turn notifies WSP **2102** of the cash transfer. The funds must be secured by WSP's bank **2110** prior to WSP **2102** transferring control of the blocks of minutes because OAAM&P **2104** interfaces with WSP's **2102** pre-paid platform.

After WSP **2102** has allocated the wireless minutes (flow **2150**), vendor **2106** controls the assignment, distribution activation, and delivery of the airtime minutes. Vendor **2106** is responsible for the costs associated with the control, however, in the case of rewards, the costs are generally assumed to be the actual cost of the airtime to vendor **2106**. The vendor intends that the return on the cost will be measured in future customer patronage. WSP **2102** profits from relinquishing control similar to that shown in the reseller model. Vendor **2106** increases its subscriber base, shifts its internal allocation of resources from marketing and sales, and focuses on its core business of operating a wireless network.

Vendor **2106** independently develops sales and marketing strategies for its particular business, taking full advantage of the flexibility of rewards. A successful reward plan targets particular customers or customer groups, which will mature into a lucrative customer base. Importantly, vendor **2106** can increase the effectiveness of the rewards and increase the size of the target group of customers by offering wireless phones in addition to airtime rewards. Customers without a wireless subscription may then be enticed into the wireless market by the initial lure of a free phone. After that, fence sitters may be further persuaded into the wireless customer pool with the realistic possibility of free airtime for the free phone, all in return for a little vendor loyalty. WSP **2102** also benefits from the proliferation of new wireless phones by selling more airtime to the new subscribers.

Referring again to **Figure 21**, the vendor's legacy TP&B system performs a customer transaction and contacts WSP's **2102** pre-paid platform in the background by way of OVAAM&P **2104** (flow **2152**). Simultaneously vendor **2106** rewards customer patronage with instantaneous airtime rewards (flow **2162**). Vendor **2106** may request that customer's **2108** wireless account be recharged equal to the amount of the reward. Another possibility for vendor **2106** is to assign both a wireless number and an allocation of airtime from the block of numbers and times already under vendor's control (flow **2154**) to customer **2108.** These numbers and minutes are allocated from the block of pre-paid numbers and minuets previously allocated from WSP **2102** (flow **2150**). Additionally, the customer transaction may also initiate a draft from vendor's bank **2112** to WSP's bank **2110** for recharging the pre-allocation in vendor's pre-paid account, as depicted in **Figure 14**.

Another situation particularly well suited for the implementation of the OVAAM&P system relates to a co-branding model. Co-branding is a marketing technique where two or more consumer brands are tied together to create products and services that leverage the unique brand appeal, etc. of both.

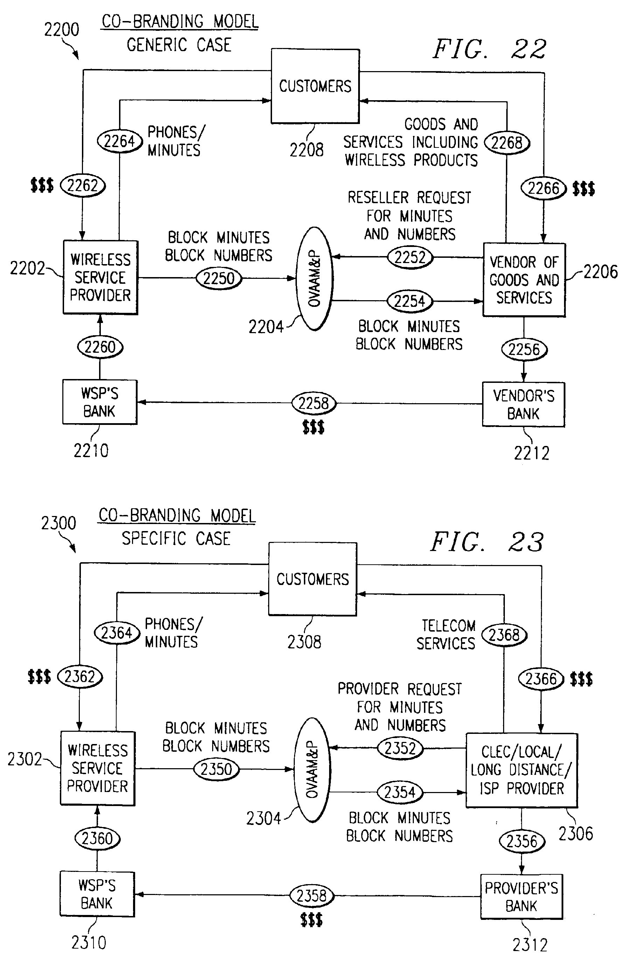

**Figure 22** is a block diagram depicting an innovative co-branding business model utilizing an ingenious business-to-business enterprise in accordance with a preferred embodiment of the present invention, wherein two businesses band together in order to offer supplemental products to the customer, which increase the appeal of core product lines.

One form of the co-branding business model particular suited to the advantages offered by the OVAAM&P system is a multi-industry co-branded products model. Here, the OVAAM&P system enables a business model where the seller of non-telecommunications services offers a co-branded product that includes wireless service. The vendor can use the appeal of a cellular phone to enhance the perceived value of the vendor's coupled product or service. As an example of a multi-industry product, consider the leasing of a new car. A car dealership can offer a three-year lease on a car and a premium cellular phone as a single product for $359 a month. To the consumer, the simplicity of the transaction is quite appealing. There is only one set of paperwork to be signed, and the consumer simply makes monthly payments toward the lease without ever seeing a cellular bill. Each month, the leasing company sends a message to the WSP, crediting the customer's account for a pre-negotiated amount. Depending on the types of cars involved, the WSP might offer a variety of cell phones and services or simply emphasize premium services. In any event, the WSP has some assurance that the subscriber will remain a customer for the next three years. The car dealership, on the other hand, uses this facility as a differentiator and to enhance its brand image.

Referring again the **Figure 22**, the depicted business-to-business enterprise works identically to model **2000** detailed in **Figure 20** with respect to the interaction between WSP **2202**, OVAAM&P **2204** and vendor **2206**, as does the transferring of funds between banks **2212** and **2210**. An important distinction between co-branding model **2200** and reseller model **2000** is that vendor **2206** does not intend to portray itself as a wireless service provider, but instead, merely enhances some aspect of vendor's own product line with wireless services. Therefore, WSP **2202** actually solicits customers from unrelated businesses such as car dealers. Vendor **2206** and WSP **2202** might both compete for wireless customers and may in fact service the same customers **2208**. However, the vendor's primary goal is to enhance the customer perception of its own products and not to become a reseller of wireless products. Therefore, there is little competitive tension between the partners, as might be expected in the case of a reseller partner.

In the example of the lease car above, customers **2208** may obtain their wireless phone and initial time plan as a package from vendor **2206** (flow **2268**) in return for making the monthly lease payment (flow **2266**). During the lease term, the car dealership would collect payment for the base wireless plan, and undoubtedly collect for additional minutes used over the base plan time allowance using the business-to-business enterprise through OVAAM&P **2204**. However, after the expiration of the lease, if customers **2208** choose to keep the car, the wireless service could be transferred to WSP **2202**.

In a similar example, customer **2208** subscribes to a wireless service plan provided by WSP **2202** and exchanges money (flow **2262**) for pre-paid wireless service (flow **2268**). Customers **2208** must constantly recharge their pre-paid wireless minutes in a manner prescribed by WSP **2202**. However, vendor **2206** may present a convenient payment alternative for customers **2208**, by rolling the wireless recharge transaction in with other transactions from the vendor. For instance, customers **2208** may recharge pre-paid wireless service at the same time they pay for automobile service at vendor's service center, thereby saving a trip to the WSP's storefront.

In accordance with another preferred embodiment of the present invention, the OVAAM&P system electronically allows coupling of two related types of co-branded products. The OVAAM&P system makes possible a business model wherein co-branded telecommunications products (bundled telecom) are linked, such that a seller of telecommunications services that does not own wireless property, partners with a WSP to offer wireless service.

**Figure 23** is a block diagram depicting an innovative co-branding business model utilizing an ingenious business-to-business enterprise in accordance with a preferred embodiment of the present invention, wherein two telecom businesses band together in order to offer supplemental products to the customer, which increase the appeal of core telecom products.

This particular business-to-business enterprise would be extremely advantageous for WSPs without wired, local, or ISP services, as well as to other telecom providers that do not provide wireless services to their customers. In accordance with specific case **2300** co-branding model, a telecom provider could complete its telecom portfolio by the addition of wireless services, without having to own a wireless platform. The addition of wireless services would be extremely attractive to customers **2308** that are in need of a complete telecom package from a telecom provider. Whereas previously customers **2308** either contracted with larger full-service telecom companies at a high cost or with multiple telecom providers. The present invention allows smaller telecom providers the option of bundling wireless services into its telecom package. Telecom provider **2306** is thereby able to compete with large telecom companies for the customers who desire fully bundled telecom services.

Referring again to **Figure 23**, telecommunications provider **2306** offers either a pre-paid or a post-paid bundled service to customers **2308.** To activate the wireless portion of the service, telecommunication provider **2306** simply sends a message to OVAAM&P system **2304** (flow **2354**), as was discussed above. WSP **2302** then responds to the message with blocks of number and/or minutes through OVAAM&P **2304** (flow **2350**), for telecom provider **2306** (flow **2354**). Thus, WSP **2302** actually solicits customers from competitive local exchange carriers (CLECs), Internet service providers (ISPs), long-distance providers, etc. Customers **2308** transact with telecom provider **2306** (flow **2366**) for bundled telecom services including wireless (flow **2368**), which has been pre-paid and pre-allocated from WSP **2302** through OVAAM&P **2304**. Through this arrangement, customers **2308** receive only a single telecom bill (either quarterly, monthly, or weekly) from telecom provider **2306** rather than paying for separate wireless service from WSP **2302**. Also, because telecom provider **2306** has control of its subscriber's accounts, it can instantaneously service the accounts to the satisfaction of customers **2308**. However, customers **2308** are always free to contract with WSP **2302** for additional wireless services or subsequent to the termination of the service agreement between telecom provider **2306**.

It is important to note that, while the present invention has been described in the context of a fully functioning data processing system, those of ordinary skill in the art will appreciate that the processes of the present invention are capable of being distributed in the form of a computer readable medium of instructions and a variety of forms, and that the present invention applies equally regardless of the particular type of signal bearing media actually used to carry out the distribution. Examples of computer readable media include recordable-type media such as floppy discs, hard disk drives, RAM, and CD-ROMs and transmission-type media, such as digital and analog communications links.

The description of the present invention has been presented for purposes of illustration and description, but is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

## Claims

1. A method for implementing an open vendor account administration, maintenance and permissioning system for processing transactions related to a first business and a second business, wherein the first business uses a first business's transaction processing and billing system and the second business uses a second business's transaction processing and billing system, the method comprising:
receiving a request in a first business using a first business's transaction processing and billing system, wherein the request is formatted in a first format associated with the first business's transaction processing and billing system;
transforming the request from the first format associated with the first business's transaction processing and billing system to a second format associated with a second business's transaction processing and billing system;
converting the request to a predetermined communication protocol; and
transferring the request from the first business.

2. The method for implementing an open vendor account administration, maintenance and permissioning system recited in claim 1, wherein the second business's transaction processing and billing system is a pre-paid billing platform.

3. The method for implementing an open vendor account administration, maintenance and permissioning system recited in claim 2 further comprises transferring a message to a first bank, wherein the message authorizes the bank to transfer funds to a second bank associated with the second business.

4. The method for implementing an open vendor account administration, maintenance and permissioning system recited in claim 2, wherein the request is the first request, and the method further comprises:
receiving a second request in a first business using a first business's transaction processing and billing system, wherein the request is formatted in the first format associated with the first business's transaction processing and billing system;
transforming the second request from the first format associated with the first business's transaction processing and billing system to the second format associated with the second business's transaction processing and billing system;
converting the second request to a predetermined communication protocol; and
transferring the second request from the first business in a data packet containing the first request.

5. The method for implementing an open vendor account administration, maintenance and permissioning system recited in claim 6 further comprises transferring a message to a first bank, wherein the message authorizes the bank to transfer funds to a second bank associated with the second business for services requested in the first and second requests.

6. An open vendor account administration, maintenance and permissioning system for processing transactions related to a first business and a second business, wherein the first business uses a first business's transaction processing and billing system, and the second business uses a second business's transaction processing and billing system, the system comprising:
receiving means for receiving a request in a first business using a first business's transaction processing and billing system, wherein the
request is formatted in a first format associated with the first businesses transaction processing and billing system;
transforming means for transforming the request from the first format associated with the first business's transaction processing and billing system to a second format associated with the second business's transaction processing and billing system;
converting means for converting the request to a predetermined communication protocol; and
transferring means for transferring the request from the first business.

7. The open vendor account administration, maintenance and permissioning system recited in claim 6, wherein the second businesses transaction processing and billing system is a pre-paid billing platform.

8. The open vendor account administration, maintenance and permissioning system recited in claim 7 further comprises transferring means for transferring a message to a first bank, wherein the message authorizes the bank to transfer funds to a second bank associated with the second business.

9. The method for implementing an open vendor account administration, maintenance and permissioning system recited in claim 8, wherein the request is the first request, and the method further comprises:
receiving means for receiving a second request in a first business using a first business's transaction processing and billing system, wherein the request is formatted in the first format associated with the first business's transaction processing and billing system;
transforming means for transforming the second request from the first format associated with the first business's transaction processing and billing system to the second format associated with the second businesses transaction processing and billing system;
converting means for converting the second request to a predetermined communication protocol; and
asynchronous transferring means transferring the second request from the first business in a data packet containing the first asynchronous request.

10. The open vendor account administration, maintenance and permissioning system recited in claim 9 further comprises transferring means for transferring a message to a first bank, wherein the message authorizes the bank to transfer funds to a second bank associated with the second business, for services requested in the first and second request.

11. A data processing system implemented method employed in a business-to-business partnership between a first business and a second business, the business method comprising:
establishing a business-to-business enterprise with the second business;
receiving a request from the second business for limited control of the first business, wherein the request for limited control is received in accordance with the business-to-business enterprise; and
granting limited control of the first business to the second business,
wherein the limited control is granted in accordance with the business-to-business enterprise.

12. The method recited in claim 11, wherein the first business pertains to providing a service and the second business pertains to reselling the service.

13. The method recited in claim 12, wherein granting limited control further comprises allocating an amount of the service to the second business, and wherein receiving the request for limited control further comprises obtaining compensation from the second business for the service.

14. The method recited in claim 13, wherein the first business pertains to providing a service and the second business pertains to peddling one of a good and a service.

15. The business method recited in claim 12, wherein granting limited control further comprises:
maintaining, by the second business, records concerning at least one of a resale of the service to the customer, a service history to the customer, and a service requirement of the customer; and
holding confidential from the first business one of an identity of the customer; information related to the service resold to the customer, and marketing strategy for reselling the service to the customer.

16. A data processing system employed in a business-to-business partnership between a first business and a second business, the system comprising:
establishing means for establishing a business-to-business enterprise with the second business;
receiving means for receiving a request from the second business for limited control of the first business, wherein the request for limited control is received in accordance with the business-to-business enterprise; and
granting means for granting limited control of the first business to the second business, wherein the limited control is granted in accordance with the business-to-business enterprise.

17. The system recited in claim 16, wherein the first business pertains to providing a service and the second business pertains to reselling the service.

18. The system recited in claim 17, wherein granting limited control further comprises allocating means for allocating an amount of the service to the second business, and wherein receiving the request for limited control further comprises obtaining means for obtaining compensation from the second business for the service.

19. The system recited in claim 17, wherein granting limited control further comprises:
allocating means for maintaining, by the second business, records concerning at least one of a resale of the service to the customer, a service history to the customer, and a service requirement of the customer; and
allocating means for holding confidential from the first business one of an identity of the customer; information related to the service resold to the customer, and marketing strategy for reselling the service to the customer.

20. A data processing system implemented program product employed in a business-to-business partnership between a first business and a second business, the program comprising:
establishing instructions for establishing a business-to-business enterprise with the second business;
receiving instructions for receiving a request from the second business for limited control of the first business, wherein the request for limited control is received in accordance with the business-to-business enterprise; and
granting instructions for granting limited control of the first business to the second business, wherein the limited control is granted in accordance with the business-to-business enterprise.
